# EUROPEAN PATENT APPLICATION

(11) **EP 4 216 636 A1**
(43) Date of publication of application: **26.07.2023**
(21) Application number: 21869210.1
(22) Date of filing: 03.09.2021
(51) Int. Cl.: H04W 72/04, H04W 28/04, H04W 84/12

(54) **WIRELESS COMMUNICATION DEVICE, AND WIRELESS COMMUNICATION METHOD**

(30) Priority: 18.09.2020 JP 2020157023
(71) Applicant: Sony Group Corporation, Minato-Ku, Tokyo, 108-0075 (JP)
(72) Inventor: SUGAYA Shigeru, Tokyo 108-0075 (JP); AIO Kosuke, Tokyo 108-0075 (JP); HIRATA Ryuichi, Tokyo 108-0075 (JP); TANAKA Yusuke, Tokyo 108-0075 (JP)
(74) Representative: D Young & Co LLP
(86) International application number: PCT/JP2021/032451
(87) International publication number: WO 2022/059523

(57) **Abstract**

The present technology relates to a wireless communication apparatus and a wireless communication method capable of promptly notifying a wireless communication apparatus on a transmission side of a data reception status of a wireless communication apparatus on a reception side.

The wireless communication apparatus includes a transmitter that transmits data to another wireless communication apparatus via one or more first links, and a receiver that receives control information from the another wireless communication apparatus via one or more second links in parallel with transmission of the data via the one or more first links. The present technology can be applied to, for example, a wireless communication apparatus that performs multi-link operation (MLO).

## Description

### TECHNICAL FIELD

The present technology relates to a wireless communication apparatus and a wireless communication method, and particularly to a wireless communication apparatus and a wireless communication method suitable for use in performing wireless communication by using a multi-link operation (MLO).

### BACKGROUND ART

Conventionally, there is a system called orthogonal frequency division multiple access (OFDMA) or multi-user multi-channel (MU-MC) (see, for example, Patent Document 1) that transmits to a plurality of terminals or receives from a plurality of terminals simultaneously on a plurality of channels.

In addition, a multi-link operation (MLO), which is a technology of transferring data by using a plurality of links (frequency bands), is currently being studied in IEEE 802.11 task group be.

Furthermore, in the MLO, a technology of returning ACK information (acknowledge notification information) including not only a reception status of data of an own link but also a reception status of data of other links via each link has been studied. In this case, every time the reception of the data of each link is completed, a communication apparatus on a reception side returns ACK information including the reception status of the own link and the data of other links via the link in which the reception of the data is completed.

### CITATION LIST

### PATENT DOCUMENT

Patent Document 1: Japanese Patent Application Laid-Open No. 2019-80320

### SUMMARY OF THE INVENTION

### PROBLEMS TO BE SOLVED BY THE INVENTION

However, in a case where the ACK information is returned via the link in which the reception of the data is completed every time the reception of the data of each link is completed, a communication apparatus on a transmission side cannot recognize a data reception status of a communication apparatus on a reception side until the reception of the data is completed in any of the links. For example, in a case where an aggregation-MAC protocol data unit (A-MPDU) frame obtained by aggregating a plurality of MAC protocol data units (MPDUs) is transferred by using the MLO, the communication apparatus on the transmission side cannot recognize a reception status of each MPDU until reception of the A-MPDU frame is completed in any of the links.

The present technology has been made in view of such a situation, and makes it possible to promptly notify a wireless communication apparatus on a transmission side of a data reception status of a wireless communication apparatus on a reception side.

### SOLUTIONS TO PROBLEMS

A wireless communication apparatus according to a first aspect of the present technology includes a transmitter that transmits data to another wireless communication apparatus via one or more first links, and a receiver that receives control information from the another wireless communication apparatus via one or more second links in parallel with transmission of the data via the one or more first links.

A wireless communication method according to the first aspect of the present technology includes transmitting, by a wireless communication apparatus, data to another wireless communication apparatus via one or more first links, and receiving, by the wireless communication apparatus, control information from the another wireless communication apparatus via one or more second links in parallel with transmission of the data via the one or more first links.

In the first aspect of the present technology, the data is transmitted to the another wireless communication apparatus via the one or more first links, and the control information is received from the another wireless communication apparatus via the one or more second links in parallel with transmission of the data via the one or more first links.

A wireless communication apparatus according to a second aspect of the present technology includes a receiver that receives data from another wireless communication apparatus via one or more first links, and a transmitter that transmits control information from the another wireless communication apparatus via one or more second links in parallel with transmission of the data via the one or more first links.

The wireless communication method according to the first aspect of the present technology includes receiving, by a wireless communication apparatus, data from another wireless communication apparatus via one or more first links, and transmitting, by the wireless communication apparatus, control information to the another wireless communication apparatus via one or more second links in parallel with transmission of the data via the one or more first links.

In the first aspect of the present technology, the data is received from the another wireless communication apparatus via the one or more first links, and the control information is transmitted to the another wireless communication apparatus via the one or more second links in parallel with reception of the data via the one or more first links.

### BRIEF DESCRIPTION OF DRAWINGS

Fig. 1 is a diagram illustrating an example of a flow of data in a case where data is transferred by an MLO.
Fig. 2 is a diagram illustrating an example of a flow of data in a case where data is transferred by the MLO.
Fig. 3 is a sequence diagram illustrating a communication status in a case where an OBSS network exists in the vicinity.
Fig. 4 is a sequence diagram illustrating an example of a communication status in a case where the MLO is performed by using links having close frequency bands.
Fig. 5 is a diagram illustrating a configuration example of a wireless LAN network to which the present technology is applied.
Fig. 6 is a block diagram illustrating a configuration example of a wireless communication apparatus to which the present technology is applied.
Fig. 7 is a block diagram illustrating a configuration example of a wireless communication module.
Fig. 8 is a diagram for describing a first embodiment of a communication method to which the present technology is applied.
Fig. 9 is a diagram for describing the first embodiment of the communication method to which the present technology is applied.
Fig. 10 is a diagram illustrating a configuration example of a Multi-Link Setup Request and a Multi-Link Setup Response.
Fig. 11 is a diagram illustrating a configuration example of an A-MPDU frame.
Fig. 12 is a diagram illustrating a first configuration example of a block ACK frame.
Fig. 13 is a diagram illustrating a second configuration example of a block ACK frame.
Fig. 14 is a diagram for describing a second embodiment of the communication method to which the present technology is applied.
Fig. 15 is a diagram for describing the second embodiment of the communication method to which the present technology is applied.
Fig. 16 is a diagram illustrating a third configuration example of the block ACK frame.
Fig. 17 is a flowchart for describing multi-link setting processing.
Fig. 18 is a flowchart for describing the multi-link setting processing.
Fig. 19 is a flowchart for describing data transmission processing.
Fig. 20 is a flowchart for describing the data transmission processing.
Fig. 21 is a flowchart for describing data reception processing.
Fig. 22 is a flowchart for describing the data reception processing.
Fig. 23 is a diagram for describing a first modification of the communication method to which the present technology is applied.
Fig. 24 is a diagram for describing a second modification of the communication method to which the present technology is applied.
Fig. 25 is a diagram for describing a third modification of the communication method to which the present technology is applied.
Fig. 26 is a diagram illustrating an example of allocation of frequency bands and channels usable in the wireless LAN network.
Fig. 27 is a diagram illustrating examples of a frequency band assigned to each link.
Fig. 28 is a block diagram illustrating a configuration example of a computer.

### MODE FOR CARRYING OUT THE INVENTION

Hereinafter, embodiments for implementing the present technology will be described. The description will be made in the following order.
1. Background of the present technology
2. Embodiments
3. Modifications
4. Others

### <<1. Background of the present technology>>

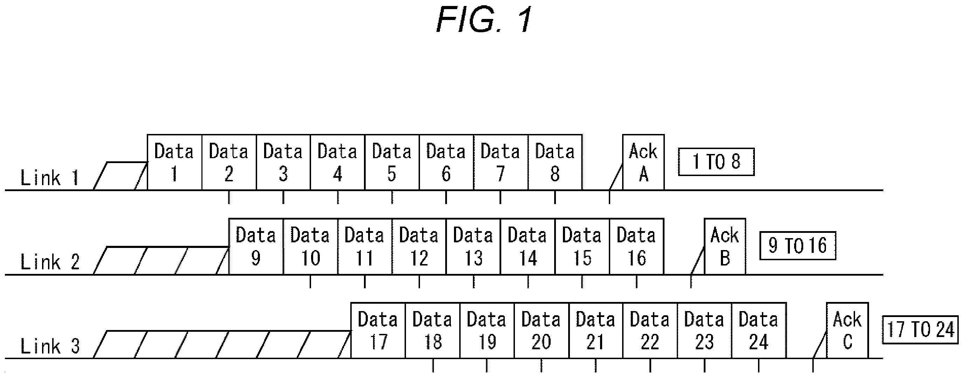

First, a background of the present technology will be described with reference to Figs. 1 to 4.

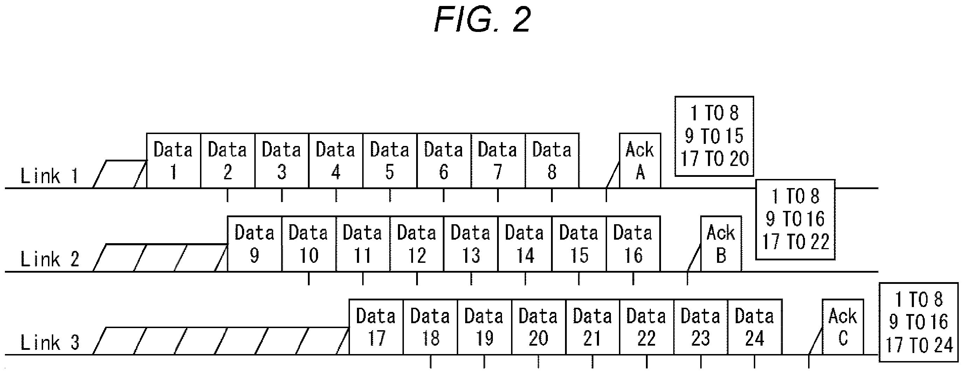

Figs. 1 and 2 are diagrams each illustrating an example of a flow of data in a case where data is transferred between two wireless communication apparatuses via three links including links 1 to 3 by using an MLO.

A square frame including characters "Data" represents an MPDU which is a unit of data transfer by each link. In addition, a number under the characters of "Data" is a sequence number for identifying each MPDU. A square frame including characters "Ack" indicates a block ACK frame including ACK information (acknowledge notification information) for giving notification of acknowledgement of data. A parallelogram frame indicates a backoff period.

Hereinafter, the MPDU may be simply referred to as data. In addition, hereinafter, the MPDU with a sequence number i is also referred to as data i. For example, the MPDU with a sequence number 1 is also referred to as data 1.

Furthermore, hereinafter, a wireless communication apparatus that transmits data is referred to as a transmission side communication apparatus. Hereinafter, a wireless communication apparatus that receives data is referred to as a reception side communication apparatus.

Figs. 1 and 2 illustrate an example in which an A-MPDU frame in which a plurality of MPDUs is aggregated (concatenated) is transferred via each link. For example, an A-MPDU frame in which data 1 to 8 are aggregated is transferred via the link 1. An A-MPDU frame in which data 9 to 16 are aggregated is transferred via the link 2. An A-MPDU frame in which data 17 to 24 are aggregated is transferred via the link 3.

In addition, Fig. 1 illustrates an example in which a sequence number of data transferred for each link is managed and ACK information is returned.

For example, in a case where the transmission side communication apparatus acquires an access right of the link 1 by predetermined access control, here, the transmission side communication apparatus performs frame aggregation of the data 1 to 8. Then, the transmission side communication apparatus transmits the A-MPDU frame including the data 1 to 8 to the reception side communication apparatus via the link 1.

On the other hand, after completing the reception of the A-MPDU frame, the reception side communication apparatus returns a block ACK frame A including ACK information of the data 1 to 8 to the transmission side communication apparatus via the link 1.

In a case where the transmission side communication apparatus acquires an access right of the link 2 by predetermined access control, here, the transmission side communication apparatus performs frame aggregation of the data 9 to 16. Then, the transmission side communication apparatus transmits the A-MPDU frame including the data 9 to 16 to the reception side communication apparatus via the link 2.

On the other hand, after completing the reception of the A-MPDU frame in the link 2, the reception side communication apparatus returns a block ACK frame B including ACK information of the data 9 to 16 to the transmission side communication apparatus via the link 2.

In a case where the transmission side communication apparatus acquires an access right of the link 3 by predetermined access control, here, the transmission side communication apparatus performs frame aggregation of the data 17 to 24. Then, the transmission side communication apparatus transmits the A-MPDU frame including the data 17 to 24 to the reception side communication apparatus via the link 3.

On the other hand, after completing the reception of the A-MPDU frame in the link 3, the reception side communication apparatus returns a block ACK frame C including ACK information of the data 17 to 24 to the transmission side communication apparatus via the link 3.

In this case, the transmission side communication apparatus cannot recognize a reception status of the reception side communication apparatus in each link until the reception of the A-MPDU frame of each link is completed and the block ACK frame is received. Therefore, even if there is undelivered data, the transmission side communication apparatus cannot prepare or execute retransmission of the undelivered data until reception of the A-MPDU frame is completed in each link. In addition, as an aggregation number of A-MPDU frames increases, delay time of retransmission of the undelivered data becomes longer.

The example in Fig. 2 differs from the example in Fig. 1 in the content of the block ACK frame transmitted from the reception side notification apparatus.

Specifically, the block ACK frame transmitted in each link includes not only ACK information of data received via the link in which the block ACK frame is transmitted but also ACK information of data received via other links.

For example, in a similar manner to the example in Fig. 1, after completing the reception of the A-MPDU frame in the link 1, the reception side communication apparatus transmits the block ACK frame A to the transmission side communication apparatus via the link 1. Here, the block ACK frame A includes ACK information of the data 1 to 8 received via the link 1. Furthermore, the block ACK frame A includes ACK information of the data 9 to 15 of which reception is completed in the link 2 at a time of generating the block ACK frame A, and ACK information of the data 17 to 20 of which reception is completed in the link 3.

After completing the reception of the A-MPDU frame in the link 2, the reception side communication apparatus transmits the block ACK frame B to the transmission side communication apparatus via the link 2. The block ACK frame B includes ACK information of the data 9 to 16 received via the link 2. Furthermore, here, the block ACK frame B includes ACK information of the data 1 to 8 of which reception is completed in the link 1 at a time of generating the block ACK frame B, and ACK information of the data 17 to 22 of which reception is completed in the link 3.

After completing the reception of the A-MPDU frame in the link 3, the reception side communication apparatus transmits the block ACK frame C to the transmission side communication apparatus via the link 3. The block ACK frame C includes ACK information of the data 17 to 24 received via the link 3. Furthermore, here, the block ACK frame C includes ACK information of the data 1 to 8 of which reception is completed in the link 1 at a time of generating the block ACK frame C, and ACK information of the data 9 to 16 of which reception is completed in the link 2.

In this case, the transmission side communication apparatus cannot recognize a reception status of the reception side communication apparatus in any link until the reception of the A-MPDU frame of each link is completed and the block ACK frame is received. Therefore, even if there is undelivered data, the transmission side communication apparatus cannot prepare or execute retransmission of the undelivered data until reception of the A-MPDU frame is completed in any link. In addition, as an aggregation number of A-MPDU frames increases, delay time of retransmission of the undelivered data becomes longer.

On the other hand, in the present technology, as will be described later, the reception side communication apparatus promptly notifies the transmission side communication apparatus of the data reception status so that the transmission side communication apparatus can promptly retransmit undelivered data.

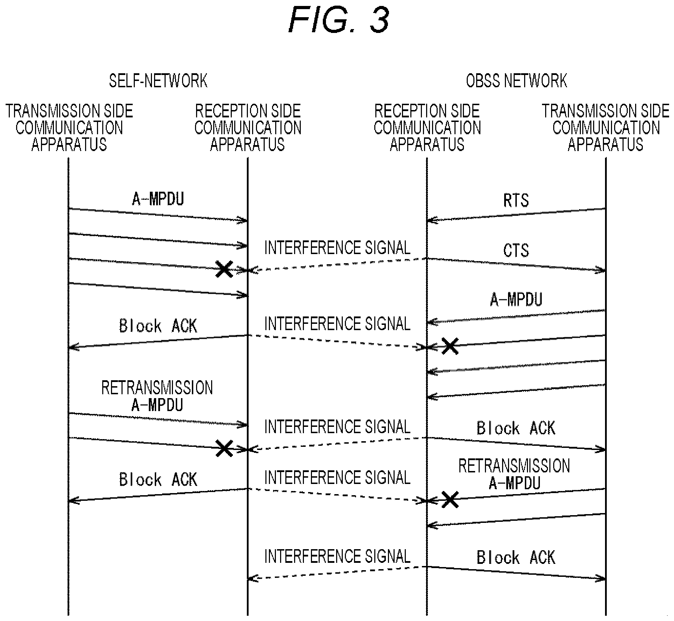

Fig. 3 is a sequence diagram illustrating an example of a communication status in a case where a communication network (hereinafter, referred to as an OBSS network) serving as an overlapping basic service set (OBSS) exists near its own wireless communication network (hereinafter, referred to as a self-network).

In this example, since data is transmitted and ACK is returned on the same channel, control information (for example, a CTS, a block ACK frame, or the like) transmitted from the reception side communication apparatus in the OBSS network becomes an interference signal and disturbs reception by the reception side communication apparatus in the self-network.

For example, a CTS transmitted from the reception side communication apparatus in the OBSS network becomes an interference signal and disturbs reception of the A-MPDU frame by the reception side communication apparatus in the self-network. In addition, the block ACK frame transmitted from the reception side communication apparatus in the OBSS network becomes an interference signal and disturbs reception of a retransmission A-MPDU frame by the reception side communication apparatus in the self-network.

Furthermore, control information (for example, a block ACK frame or the like) transmitted from the reception side communication apparatus in the self-network becomes an interference signal and disturbs reception by the reception side communication apparatus in the OBSS network.

For example, a block ACK frame transmitted from the reception side communication apparatus in the self-network becomes an interference signal and disturbs reception of the A-MPDU frame and the retransmission A-MPDU frame by the reception side communication apparatus in the OBSS.

As described above, the control information from the reception side communication apparatus in the self-network and the reception side communication apparatus in the OBSS network becomes an interference signal, data retransmission occurs, and time until completion of data transfer becomes longer.

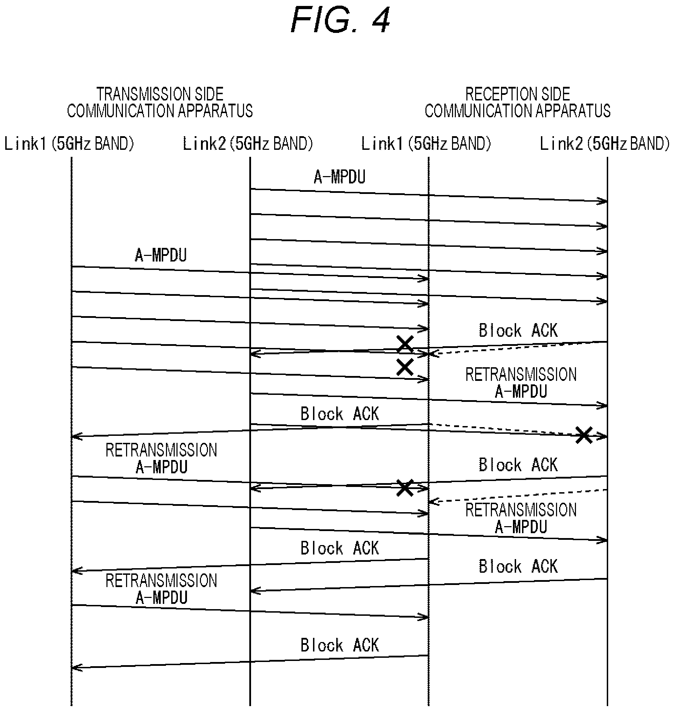

Fig. 4 is a sequence diagram illustrating an example of a communication status in a case where the MLO is performed by using links having close frequency bands.

In this example, data is transferred by using the link 1 of a 5 GHz band and the link 2 of a 6 GHz band.

For example, after completing the reception of the A-MPDU frame via the link 2, the reception side communication apparatus returns the block ACK frame. At this time, in a case where the reception side communication apparatus receives the A-MPDU frame via the link 1, the block ACK frame of the link 2 becomes an interference signal and possibly disturbs reception of the A-MPDU frame of the link 1.

For example, after completing the reception of the A-MPDU frame via the link 1, the reception side communication apparatus returns the block ACK frame. At this time, in a case where the reception side communication apparatus receives the A-MPDU frame via the link 2, the block ACK frame of the link 1 becomes an interference signal and possibly disturbs reception of the retransmission A-MPDU frame of the link 2.

As described above, in a case where a link in a close frequency band is used for the MLO, there is a possibility that a block ACK frame transmitted from the reception side communication apparatus becomes an interference signal and disturbs data transfer in other links. Therefore, there is a possibility that time required for data transfer becomes longer.

On the other hand, the present technology can reduce interference between links in the MLO as described later.

### <<2. Embodiments>>

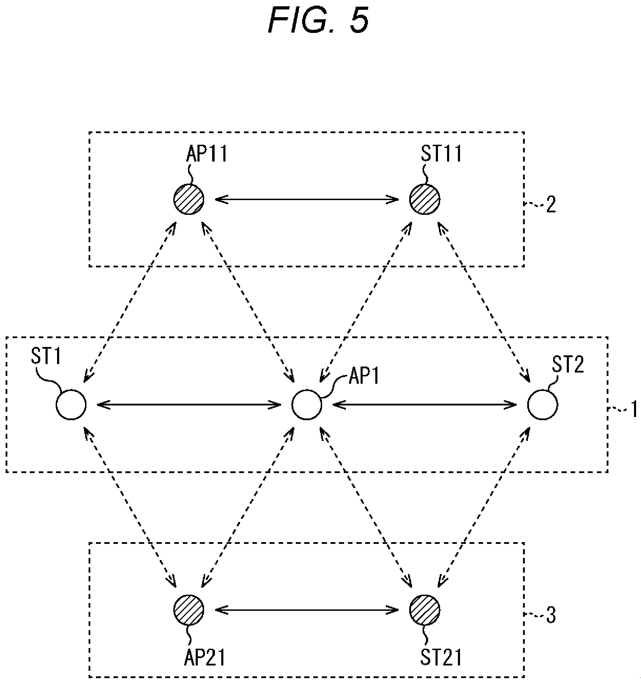

Next, embodiments of the present technology will be described with reference to Figs. 5 to 27.

### <Configuration example of wireless LAN network 1>

Fig. 5 illustrates a configuration example of a wireless LAN network 1 to which the present technology is applied.

The wireless LAN network 1 includes an access point AP1 and stations ST1 and ST2 connected to the access point AP1. The wireless LAN network 1 is close to a wireless LAN network 2 and a wireless LAN network 3.

The wireless LAN network 2 includes an access point AP11 and a station ST11 connected to the access point AP11. The wireless LAN network 3 includes an access point AP21 and a station ST21 connected to the access point AP21.

The access point AP1 is disposed at a position capable of receiving signals from the access point AP11, the access point AP21, the station ST11, and the station ST21 outside the wireless LAN network 1.

The station ST1 is disposed at a position capable of receiving signals from the access point AP11 and the access point AP21 outside the wireless LAN network 1.

The station ST2 is disposed at a position capable of receiving signals from the station ST11 and the station ST21 outside the wireless LAN network 1.

Therefore, the access point AP1, the station ST1, and the station ST2 constituting the wireless LAN network 1 need to perform fair access control with the access points and the stations constituting the wireless LAN network 2 and the wireless LAN network 3 that are close to the wireless LAN network 1.

Note that, hereinafter, the access point AP1, the access point AP11, and the access point AP21 are each simply referred to as an access point AP unless required to be individually distinguished. Hereinafter, the station ST1, the station ST2, the station ST11, and the station ST21 are each simply referred to as a stations ST unless required to be individually distinguished.

### <Configuration example of wireless communication apparatus 11>

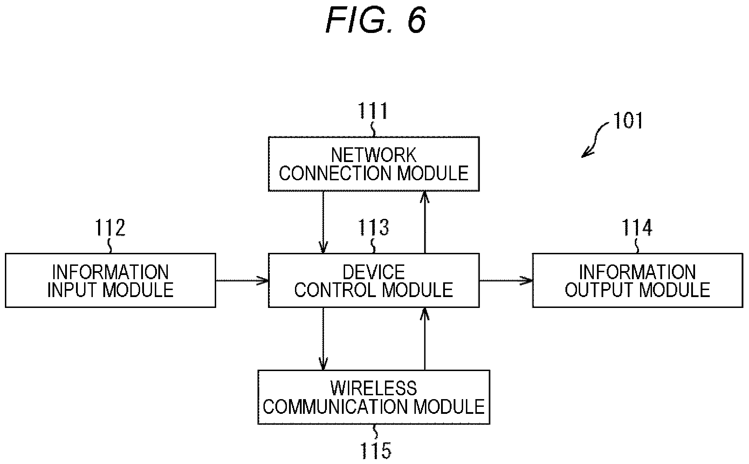

Fig. 6 is a block diagram illustrating a configuration example of a wireless communication apparatus 101 to which the present technology is applied.

The wireless communication apparatus 101 is used for each access point AP and each station ST in Fig. 1, for example.

The wireless communication apparatus 101 includes a network connection module 111, an information input module 112, a device control module 113, an information output module 114, and a wireless communication module 115.

The network connection module 111 has a function as a communication modem or the like for connecting to the Internet network in a case where the wireless communication apparatus 101 operates as an access point, for example. The network connection module 111 performs Internet connection via, for example, a public line network and an Internet service provider.

The information input module 112 includes, for example, an input device such as a push button, a keyboard, or a touch panel, and is used for inputting input information such as an instruction or data from a user. The information input module 112 supplies the input information to the device control module 113.

The device control module 113 controls the entire wireless communication apparatus 101. In addition, the device control module 113 operates the wireless communication apparatus 101 as an access point or as a station.

The information output module 114 includes, for example, a display device such as an LED, a liquid crystal panel, or an organic EL display, and an audio output device such as a speaker. The information output module 114 outputs various information such as an operation state of the wireless communication apparatus 101 and information obtained via the Internet.

The wireless communication module 115 performs wireless communication with another wireless communication apparatus 101 (the access point AP or the station ST) .

Note that, in each access point AP or each station ST, unnecessary modules among the modules of the wireless communication apparatus 101 may be deleted or simplified as necessary.

### <Configuration example of wireless communication module 115>

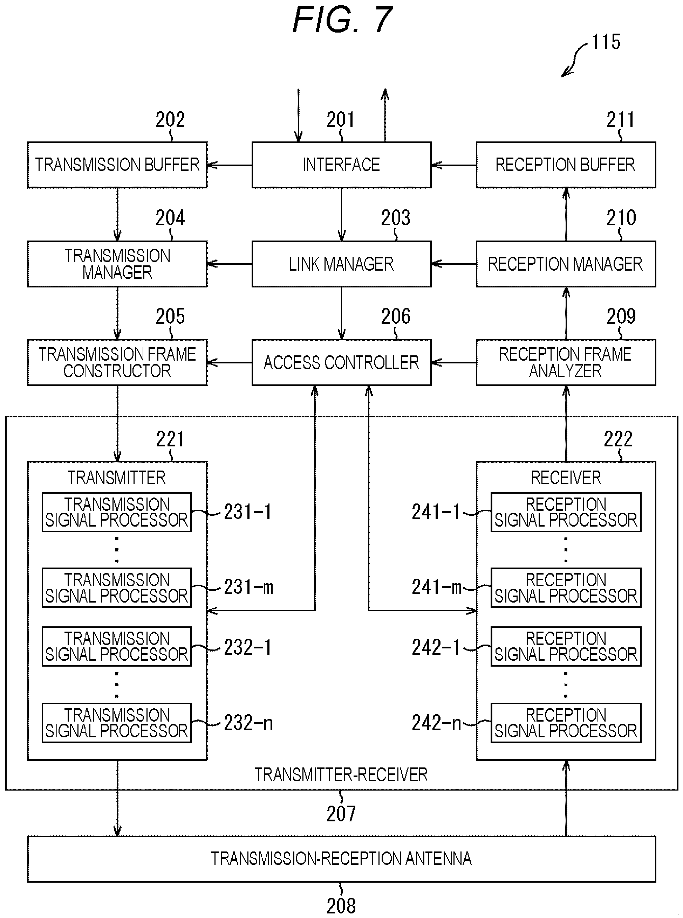

Fig. 7 illustrates a configuration example of the wireless communication module 115 of the wireless communication apparatus 101 in Fig. 6.

The wireless communication module 115 includes an interface 201, a transmission buffer 202, a transmission manager 204, a transmission frame constructor 205, an access controller 206, a transmitter-receiver 207, a transmission-reception antenna 208, a reception frame analyzer 209, a reception manager 210, and a reception buffer 211.

The interface 201 is connected to the device control module 113 and exchanges various data with the device control module 113. In addition, the interface 201 exchanges various data with the network connection module 111, the information input module 112, and the information output module 114 via the device control module 113.

The transmission buffer 202 stores data to be transmitted to the reception side communication apparatus.

The link manager 203 sets a link (hereinafter, referred to as a data transfer link) mainly used for data transfer and a link (hereinafter, referred to as a return link) mainly used for transfer, for example, of control information in a direction opposite to the data transfer link, manages an operation in multi links, and the like.

The transmission manager 204 manages data and control information to be transmitted. For example, the transmission manager 204 sets a configuration of an A-MPDU frame to be transmitted and manages a sequence number of data (MPDU) included in the A-MPDU frame. For example, the transmission manager 204 controls transmission or retransmission of the A-MPDU frame and timing of transmitting control information such as a block ACK frame.

The transmission frame constructor 205 constructs various transmission frames to be transmitted to the reception side communication apparatus. For example, the transmission frame constructor 205 constructs a control information frame including various control information. The transmission frame constructor 205 constructs an A-MPDU frame by aggregating (concatenating) data (MPDU) to be transmitted. The transmission frame constructor 205 supplies the constructed transmission frame to a transmitter 221 of the transmitter-receiver 207.

The access controller 206 controls access of each link. For example, the access controller 206 controls access to each data transfer link in accordance with a predetermined access control procedure via transmission signal processors 231-1 to 231-m of the transmitter 221. For example, the access controller 206 performs carrier sensing of each data transfer link, confirms a use state, and sets a backoff time.

In addition, the access controller 206 controls access to each return link in accordance with a predetermined access control procedure via transmission signal processors 232-1 to 232-n of the transmitter 221. For example, the access controller 206 performs carrier sensing of each return link, confirms a use state, and sets a backoff time.

The transmitter-receiver 207 transmits and receives signals to and from another wireless communication apparatus 101 via the transmission-reception antenna 208. The transmitter-receiver 207 includes a transmitter 221 and a receiver 222.

The transmitter 221 transmits transmission signals to another wireless communication apparatus 101 via the transmission-reception antenna 208. The transmitter 221 includes the transmission signal processors 231-1 to 231-m and the transmission signal processors 232-1 to 232-n.

Note that, hereinafter, the transmission signal processors 231-1 to 231-m are each simply referred to as a transmission signal processor 231 unless required to be individually distinguished. Hereinafter, the transmission signal processors 232-1 to 232-n are each simply referred to as a transmission signal processor 232 unless required to be individually distinguished.

One transmission signal processor 231 is provided for each data transfer link. For example, one of the transmission signal processors 231 performs various types of signal processing such as encoding and encryption on a control information frame such as a Multi-Link Setup Request and a Multi-Link Setup Response described later and generates a transmission signal. In a case where the wireless communication apparatus 101 is a transmission side communication apparatus, each of the transmission signal processors 231 performs various types of signal processing such as encoding and encryption on the A-MPDU frame and generates a transmission signal. Each of the transmission signal processors 231 transmits a transmission signal to the reception side communication apparatus via the transmission-reception antenna 208 and the corresponding data transfer link.

One transmission signal processor 232 is provided for each return link. In a case where the wireless communication apparatus 101 is a reception side communication apparatus, each of the transmission signal processors 232 performs various types of signal processing such as encoding and encryption on the control information frame such as a block ACK frame and generates a transmission signal. Each of the transmission signal processors 232 transmits a transmission signal to the transmission side communication apparatus via the transmission-reception antenna 208 and the corresponding return link.

The receiver 222 receives reception signals from another wireless communication apparatus 101 via the transmission-reception antenna 208. The receiver 222 includes reception signal processors 241-1 to 241-m and reception signal processors 242-1 to 242-n.

Note that, hereinafter, the reception signal processors 241-1 to 241-m are each simply referred to as a reception signal processor 241 unless required to be individually distinguished. Hereinafter, the reception signal processors 242-1 to 242-n are each simply referred to as a reception signal processor 242 unless required to be individually distinguished.

One reception signal processor 241 is provided for each data transfer link. In a case where the wireless communication apparatus 101 is a reception side communication apparatus, each of the reception signal processors 241 receives a reception signal from the transmission side communication apparatus via the transmission-reception antenna 208 and the corresponding data transfer link. Each of the reception signal processors 241 performs various types of signal processing such as decoding on the received reception signal, extracts a frame (for example, the A-MPDU frame) included in the reception signal, and supplies the frame to the reception frame analyzer 209.

One reception signal processor 242 is provided for each return link. In a case where the wireless communication apparatus 101 is a transmission side communication apparatus, each of the reception signal processors 242 receives a reception signal from the reception side communication apparatus via the corresponding return link and the transmission-reception antenna 208. Each of the reception signal processors 242 performs various types of signal processing such as decoding on the received reception signal, extracts a frame (for example, the block ACK frame) included in the reception signal, and supplies the frame to the reception frame analyzer 209.

The reception frame analyzer 209 analyzes various received frames. For example, the reception frame analyzer 209 extracts individual MPDUs from the A-MPDU frame and determines whether or not each MPDU has been normally received. The reception frame analyzer 209 supplies information indicating an analysis result to the access controller 206 and the reception manager 210, and supplies obtained data to the reception manager 210.

The reception manager 210 manages data received from the transmission side communication apparatus. For example, the reception manager 210 manages information such as the sequence number of each MPDU included in the A-MPDU frame received from the transmission side communication apparatus and the presence or absence of occurrence of a reception error. In addition, the reception manager 210 extracts data from each MPDU and stores the data in the reception buffer 211.

The reception buffer 211 stores data received from the transmission side communication apparatus.

### <Communication method of wireless communication apparatus 101>

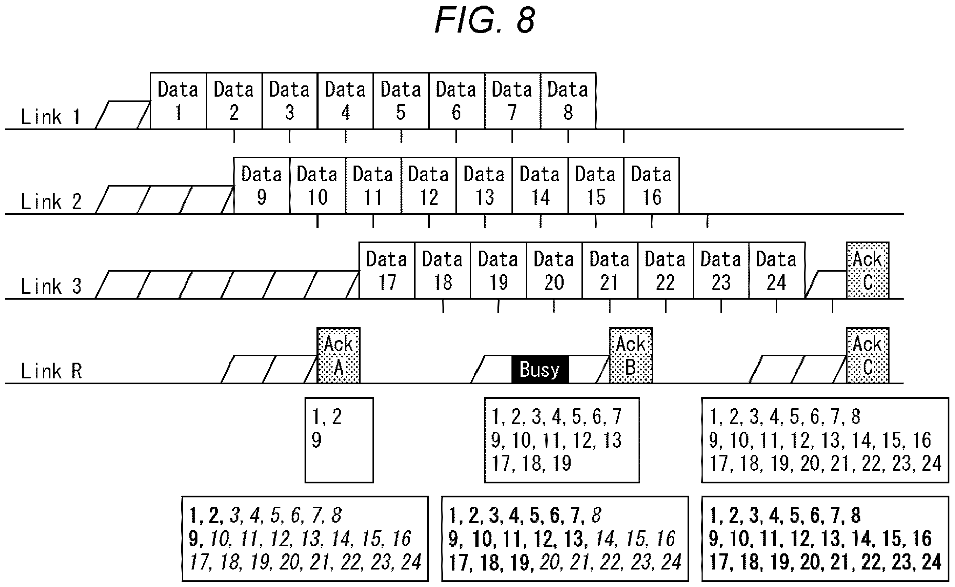

Next, a communication method of the wireless communication apparatus 101 will be described with reference to Figs. 8 to 16.

### <First embodiment of communication method of wireless communication apparatus 101>

First, a first embodiment of the communication method of the wireless communication apparatus 101 will be described with reference to Figs. 8 to 11.

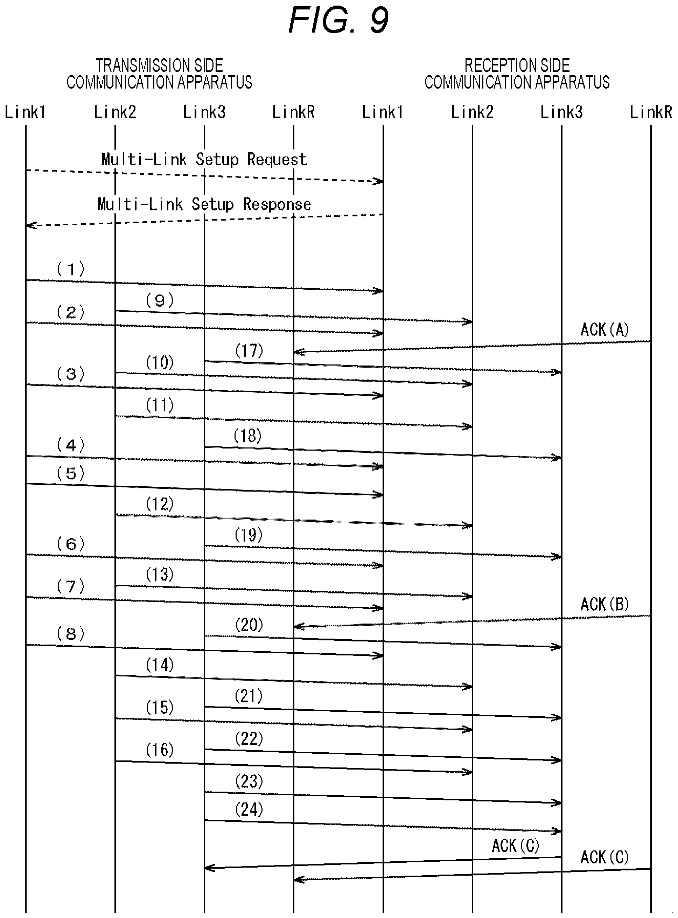

In a similar manner to Figs. 1 and 2, Fig. 8 is a diagram illustrating an example of a flow of data in a case where the data is transferred between two wireless communication apparatuses 101 by using the MLO. Fig. 9 is a sequence diagram illustrating an example of a communication procedure in the communication method of Fig. 8.

This communication method is different from the communication methods of Figs. 1 and 2 described above in that a link R is added in addition to the links 1 to 3, but in the detailed description, the method has a configuration corresponding to the contents described in Figs. 1 and 2.

The links 1 to 3 are the data transfer links described above. The link R is a return link for a frame mainly related to control information such as the block ACK frame described above.

By providing the link R in this manner, the reception side communication apparatus can transmit the block ACK frame after performing access control to the link R at an arbitrary timing. For example, the reception side communication apparatus can transmit the block ACK frame in parallel with the reception of data via the data transfer link. In other words, while receiving data via the data transfer link, the reception side communication apparatus can return, to the transmission side communication apparatus, a block ACK frame including ACK information or NACK information of data received via each data transfer link by a time point (precisely, at a time at which the block ACK frame is generated) at which the block ACK frame is transmitted.

Specifically, first, the transmission side communication apparatus transmits a Multi-Link Setup Request to the reception side communication apparatus via a specific link (for example, the link 1).

On the other hand, the reception side communication apparatus returns a Multi-Link Setup Response, which is a response to the Multi-Link Setup Request, to the transmission side communication apparatus via the same link. Therefore, parameters such as a plurality of link information for performing multi-link operation are exchanged.

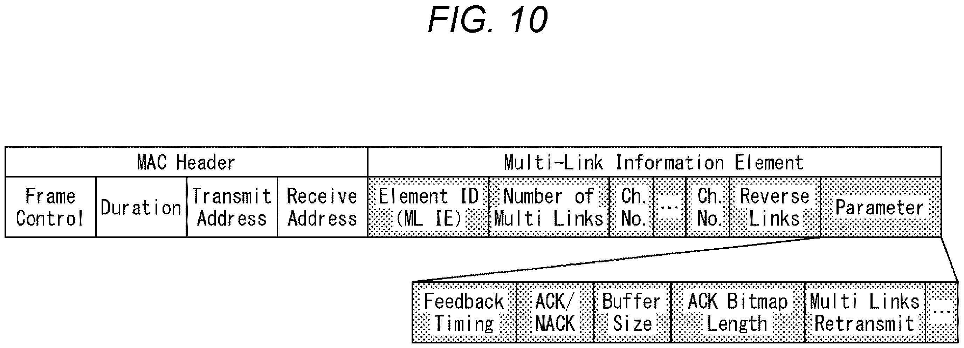

Fig. 10 is a diagram illustrating a configuration example of the Multi-Link Setup Request and the Multi-Link Setup Response. Note that items to which dot patterns are given in Fig. 10 are items specific to the present technology. Description of other items will be omitted as appropriate.

The Multi-Link Setup Request and the Multi-Link Setup Response include a MAC Header and a Multi-Link Information Element.

The MAC Header includes Frame Control indicating a frame type, Duration indicating a duration of a frame, a Transmit Address indicating a transmission source address, and a Receive Address indicating a reception destination address.

The Multi-Link Information Element includes Element ID (ML IE), a Number of Multi Links, a Ch. No., Reverse Links, and a Parameter.

The Element ID (ML IE) indicates a type of an element (Multi-Link Information Element).

The Number of Multi Links indicates the number of links for which multi links can be set.

The Ch. No. is provided as many as the number indicated in the Number of Multi Links, and indicates channel numbers of links for which multi links can be set.

The Reverse Links indicates a channel number of a link to be set as a return link among links for which multiple links can be set. Note that, in a case where a plurality of return links is set as described later, the channel number of each of the return links is set to Reverse Links.

The Parameter includes Feedback Timing, ACK/NACK, Buffer Size, ACK Bitmap Length, Multi Links Retransmit, and the like.

The Feedback Timing indicates, for example, a timing at which feedback (return of a block ACK frame) is performed.

The ACK/NACK indicates which of ACK information and NACK information is included in a configuration of the block ACK frame to be described later.

The Buffer Size indicates a capacity of the reception buffer 211 of the reception side communication apparatus.

The ACK Bitmap Length indicates, for example, information related to a bit length of Block ACK Bitmap of the block ACK frame.

The Multi Links Retransmit indicates information related to whether or not to retransmit data by multi links.

For example, a value of each parameter desired by the transmission side communication apparatus is set as the Multi-Link Setup Request. On the other hand, for example, a value of each parameter determined by the reception side communication apparatus is set as the Multi-Link Setup Response. Therefore, each parameter is adjusted.

Next, the transmission side communication apparatus waits for reception of control information such as ACK information via the link R while transmitting data via the links 1 to 3. On the other hand, the reception side communication apparatus waits for data reception via the links 1 to 3 while transmitting control information such as ACK information via the link R.

Then, the transmission side communication apparatus acquires the access right to links among the links 1 to 3 by a predetermined access procedure and sequentially uses the links that have become available after a lapse of a predetermined backoff time to transmit the A-MPDU frame including the data 1 to 8, the A-MPDU frame including the data 9 to 16, and the A-MPDU frame including the data 17 to 24.

Note that the number in parentheses above the arrow from the transmission side communication apparatus to the reception side communication apparatus in Fig. 9 indicates the sequence number of the data.

In this example, first, transfer of the A-MPDU frame including the data 1 to 8 is started via the link 1. Next, transfer of the A-MPDU frame including the data 9 to 16 is started via the Link 2. Finally, transfer of the A-MPDU frame including the data 17 to 24 is started via the Link 3. In addition, each A-MPDU frame is transferred in parallel via each link.

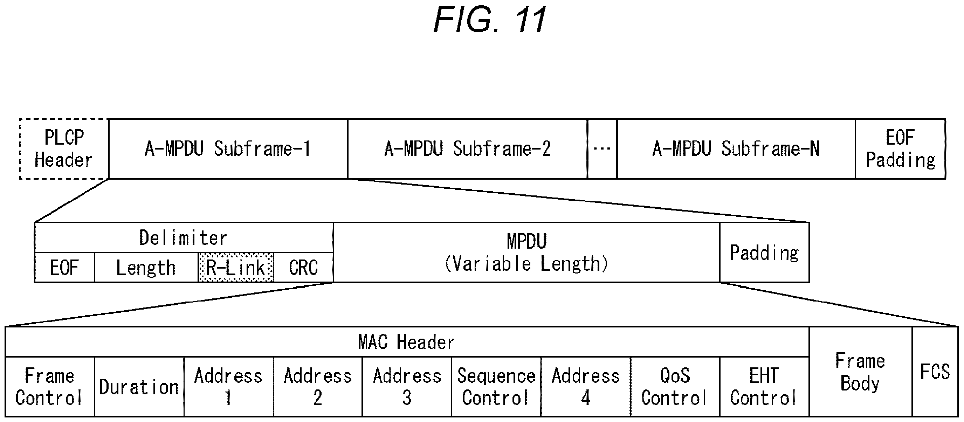

Fig. 11 illustrates a configuration example of an A-MPDU frame transmitted at this time. Note that items to which dot patterns are given in Fig. 11 are items specific to the present technology. Description of other items will be omitted as appropriate.

The configuration of this A-MPDU frame is substantially similar to the conventional frame configuration. Specifically, the A-MPDU frame includes a PLCP Header and A-MPDU Subframes corresponding to the number of MPDUs to be aggregated, and EoF Padding is added to the end as necessary.

Each of the A-MPDU Subframes includes a Delimiter and individual MPDUs, and a Padding is added to the end as necessary.

The Delimiter includes R-Link in addition to EOF, Length, and CRC. The R-Link is different from the configuration of the conventional A-MPDU frame.

The R-Link includes a bit for performing a multi-link operation and identifying that control information is transferred via a return link.

The MPDU includes MAC Header, Frame Body, and FCS.

Note that the R-Link may be included in all the A-MPDU Subframes. Alternatively, the R-Link may be included in, for example, only the A-MPDU Subframe as a timing at which the ACK information is returned. That is, the reception side communication apparatus may return the block ACK frame at a timing when the A-MPDU Subframe including the R-Link is received.

Furthermore, the R-Link may be included in, for example, PLCP Header or EHT Control.

As described above, each A-MPDU frame is transferred at different timings via each data transfer link. Therefore, the data (MPDU) included in each A-MPDU frame arrives at the reception side communication apparatus at different timings.

On the other hand, the reception side communication apparatus receives the A-MPDU frame transmitted via each data transfer link, sequentially decodes the data included in the A-MPDU frame, and collects the data.

Furthermore, the reception side communication apparatus returns ACK information via the link R at a predetermined timing. That is, the reception side communication apparatus acquires the access right of the link R by a predetermined access procedure at a predetermined timing, and returns a block ACK frame including ACK information via the link R that has become available after a lapse of a predetermined backoff time.

Note that the number in the square frame in the second row from the bottom of Fig. 8 indicates the sequence number of the data of which the ACK information is transmitted by each block ACK frame.

In this example, after the data 2 is received, a block ACK frame A including ACK information of the data 1 and 2 received via the link 1 and the data 9 received via the link 2 is returned.

Next, after the reception of the data 7, a block ACK frame B including ACK information of the data 1 to 7 received via the link 1, the data 9 to 13 received via the link 2, and the data 17 to 19 received via the link 3 is returned.

Note that in a case where the link R is in a busy state, the block ACK frame B is returned after the busy state is released.

Finally, the block ACK frame C including the ACK information of all the data is returned at a timing when the reception of all the data (all the A-MPDU frames) is completed.

Note that, for example, in order to ensure compatibility with the conventional method, a block ACK frame including the ACK information of all the data may be returned via the data transfer link at a timing when the reception of all the data is completed. In this case, for example, the link 3 in which the reception of the A-MPDU frame is completed last among the plurality of data transfer links is used for returning the block ACK frame.

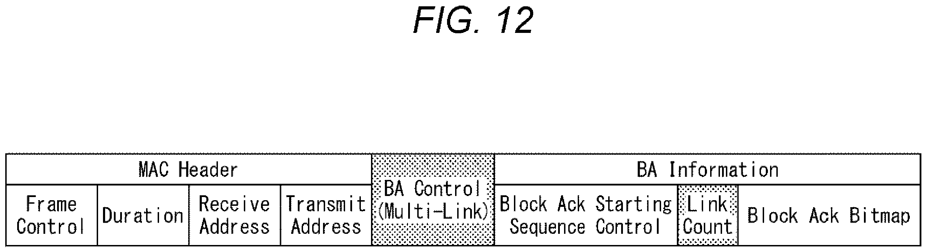

Fig. 12 illustrates a first configuration example of the block ACK frame transmitted at this time. Note that items to which dot patterns are given in Fig. 12 are items specific to the present technology. Description of other items will be omitted as appropriate.

The block ACK frame includes MAC Header, BA Control, and BA Information.

The MAC Header includes Frame Control indicating a frame type, a Duration indicating a duration of a frame, a Receive Address indicating a reception destination address, and a Transmit Address indicating a transmission source address.

A value for identifying that the block ACK frame is a block ACK frame on which MLO is performed is set to the BA Control.

The BA Information includes Block Ack Stating Sequence Control, Link Count, and Block Ack Bitmap.

The Link Count indicates the number of the data transfer links.

The Block Ack Bitmap includes bits indicating that all data received via all the data transfer links have been received or not yet delivered. Therefore, an information length of the Block Ack Bitmap is longer than that of the conventional block ACK frame.

Note that the number in the square frame in the bottom row of Fig. 8 indicates the value of the Block Ack Bitmap of the block ACK frame. Specifically, each number indicates a sequence number of each data. Then, a sequence number in which 1 indicating that the data has been received in the Block Ack Bitmap is set is illustrated in bold. A sequence number in which 0 is set in the Block Ack Bitmap to indicate that the data is undelivered is illustrated in italics. Specifically, for example, the Block Ack Bitmap of the first block ACK frame indicates that values are set to 1 for the data 1, 2, and 9, and values are set to 0 for the data 3 to 8 and 10 to 24.

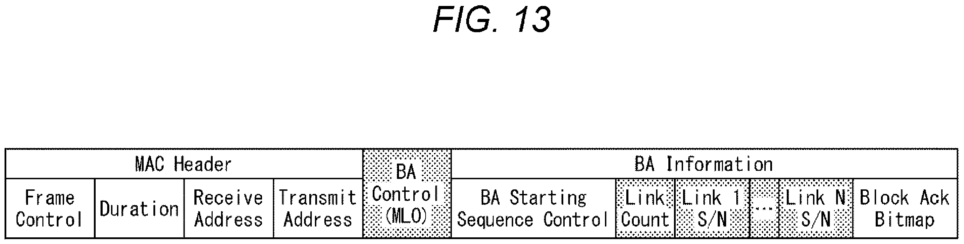

Fig. 13 illustrates a second configuration example of the block ACK frame. Note that items to which dot patterns are given in Fig. 13 are items specific to the present technology. Description of other items will be omitted as appropriate.

The block ACK frame in Fig. 13 is different from the block ACK frame in Fig. 12 in that a value set to the BA control is different and that the BA Information includes link1 S/N to link N S/N.

In the link1 S/N to the link N S/N, the sequence number of the latest data for which the reception side communication apparatus can perform decoding processing regardless of the presence or absence of a data error among the data received in each data transfer link is set. Therefore, the Link1 S/N to the Link N S/N enable the transmission side communication apparatus to recognize up to which sequence number of data reception processing is executed in each data transfer link by the reception side communication apparatus.

For example, there is a case where a difference occurs between data already transmitted by the transmission side communication apparatus and data already received by the reception side communication apparatus for such a reason as time required to decode the data in the reception side communication apparatus. In this case, for example, a difference occurs between the received data indicated in the Block Ack Bitmap of the block ACK frame and the data transmitted by the transmission side communication apparatus.

On the other hand, the transmission side communication apparatus can recognize the sequence number of the latest data received by the reception side communication apparatus in each data transfer link by the Link1 S/N to Link N S/N. Therefore, the transmission side communication apparatus can quickly recognize whether the deviation described above is caused by a delay in processing such as decoding of the reception side communication apparatus or caused by a reception error. As a result, the transmission side communication apparatus can more quickly and accurately recognize undelivered data in which a reception error has occurred.

Note that, in the above description, an example has been described in which the block ACK frame includes the ACK information of each data. Alternatively, the block ACK frame may include NACK information (non-delivery notification information) for notifying that data have not been delivered yet.

For example, the block ACK frame A may include NACK information corresponding to a sequence number of data in which an error occurs among the data 3 to 8 and 10 to 24. The block ACK frame B may include NACK information of the data 14 to 16 and 20 to 24.

As described above, the transmission side communication apparatus can recognize the data reception status of the reception side communication apparatus during data transmission. Therefore, the transmission side communication apparatus can quickly recognize, for example, data that has not been delivered due to a reception error, and quickly response by retransmission processing or the like.

In addition, in each of the transmission side communication apparatus and the reception side communication apparatus, the reception status of the data transferred via each data transfer link is collectively managed, and it is therefore easy to know a retransmission frame transferred via each link or the like.

### <Second embodiment of communication method of wireless communication apparatus 101>

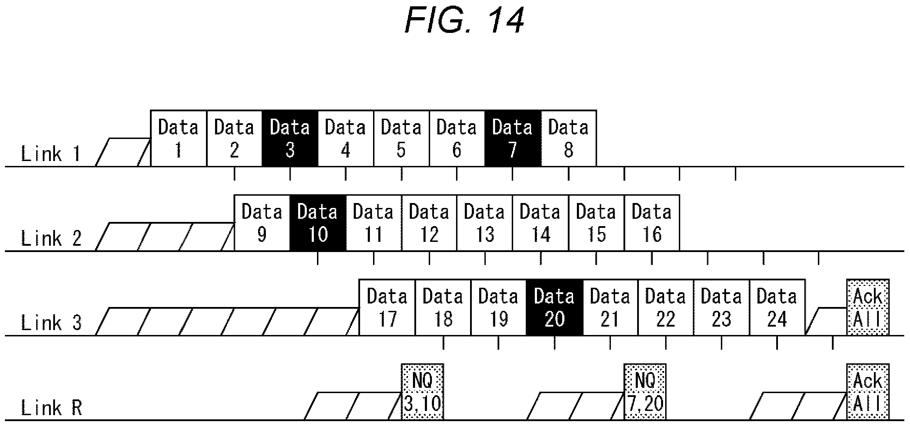

Next, a second embodiment of the communication method of the wireless communication apparatus 101 will be described with reference to Figs. 14 to 16.

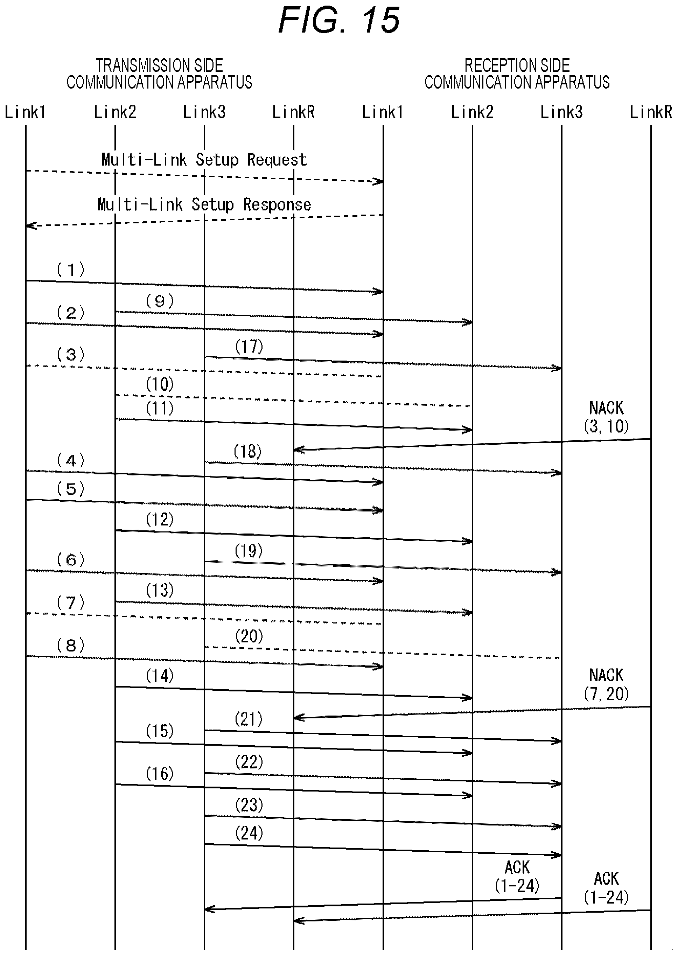

Fig. 14 is a diagram illustrating a flow of data in a case where the data is transferred between two wireless communication apparatuses 101 by using the MLO in a similar manner to Fig. 8. Fig. 15 illustrates a sequence diagram illustrating an example of a transfer procedure in the communication method of Fig. 14 in a similar manner to Fig. 9 described above.

The second embodiment is different from the first embodiment in that NACK information is returned after occurrence of undelivered data.

Note that processing other than returning the block ACK frame via the return link is similar to processing according to the first embodiment, and the description thereof will be appropriately omitted.

Specifically, in the second embodiment, in a similar manner to the first embodiment, the links 1 to 3 are set as data transfer links, and the link R is set as a return link.

On the other hand, the second embodiment is different from the first embodiment in that the reception side communication apparatus does not return ACK information at a predetermined timing, but returns NACK information in a case where a reception error occurs.

Note that the cause of the reception error is not limited. For example, a case where error correction of data fails, a case where data loss occurs, and the like are assumed.

Specifically, the data 3, 7, 10, and 20 indicated by white dots in Fig. 14 indicate data that has not been delivered due to occurrence of a reception error. In a similar manner, dotted lines in Fig. 15 indicate that a reception error has occurred. That is, it is indicated that a reception error has occurred in the data 3, 7, 10, and 20.

On the other hand, the reception side communication apparatus returns NACK information every time the number of undelivered data reaches a predetermined number. In this example, NACK information is returned every time the number of undelivered data reaches two.

Specifically, first, a reception error of the data 3 occurs in the link 1, and then a reception error of the data 10 occurs in the link 2, and the number of undelivered data reaches 2. On the other hand, the reception side communication apparatus returns a block ACK frame including NACK information of the data 3 and 10 via the link R.

Next, a reception error of the data 7 occurs in the link 1, and then a reception error of the data 20 occurs in the link 3, and the number of undelivered data reaches 2. On the other hand, the reception side communication apparatus returns a block ACK frame including NACK information of the data 7 and 20 via the link R.

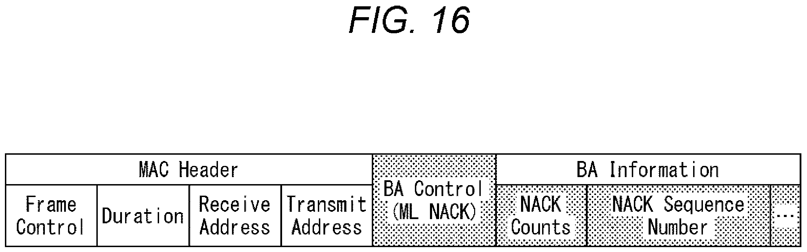

Fig. 16 illustrates a configuration example of the block ACK frame transmitted at this time. Note that items to which dot patterns are given in Fig. 16 are items specific to the present technology. Description of other items will be omitted as appropriate.

The block ACK frame in Fig. 16 is different from the block ACK frame in Fig. 12 in a value set to the BA Control and a configuration of the BA Information.

A value indicating that the block ACK frame is a block ACK frame on which MLO is performed and includes NACK information is set to the BA Control.

The BA Information includes a NACK Count and a NACK Sequence Number.

The NACK Count indicates the number of data (that is, the number of undelivered data) for which notification of the NACK information is given by the block ACK frame.

The NACK Sequence Number is provided as many as the number of undelivered data and indicates the sequence number of each undelivered data.

This makes it possible to notify the transmission side communication apparatus of the sequence number of the undelivered data without returning redundant Block Ack Bitmap. In particular, as the number of data transfer links increases, the bit length of the Block Ack Bitmap increases, and thus the amount of information notification of which is given decreases and the effect increases.

Note that the number of pieces of data in which a reception error as a return condition of the block ACK frame has occurred can be appropriately changed. For example, the number can be set to one or three or more. Furthermore, for example, the block ACK frame may be returned every time a predetermined time elapses.

Then, in a similar manner to the first embodiment, at the timing when the reception of all the data (all the A-MPDU frames) is finally completed, the block ACK frame including the ACK information of all the data is returned via the link R.

Note that, in a similar manner to the first embodiment, in order to ensure compatibility with the conventional method, a block ACK frame including ACK information of all the data may be returned via the data transfer link in which reception of the A-MPDU frame has been completed last at a timing when reception of all the data has been completed.

### <Processing of wireless communication apparatus 101>

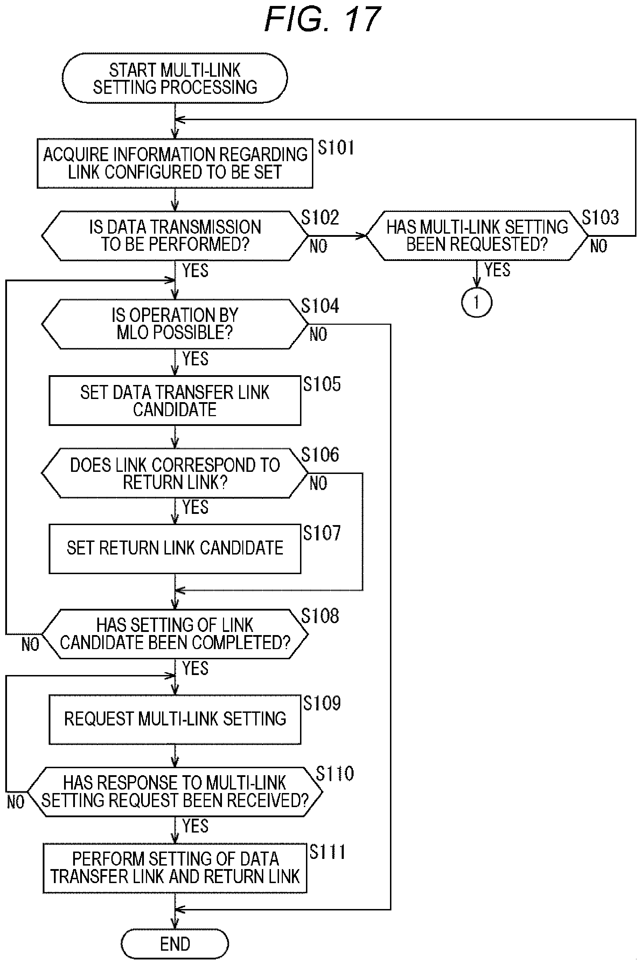

Next, processing of the wireless communication apparatus 101 for implementing the communication method described above with reference to Figs. 8 to 16 will be described with reference to Figs. 17 to 22.

### <Multi-link setting processing>

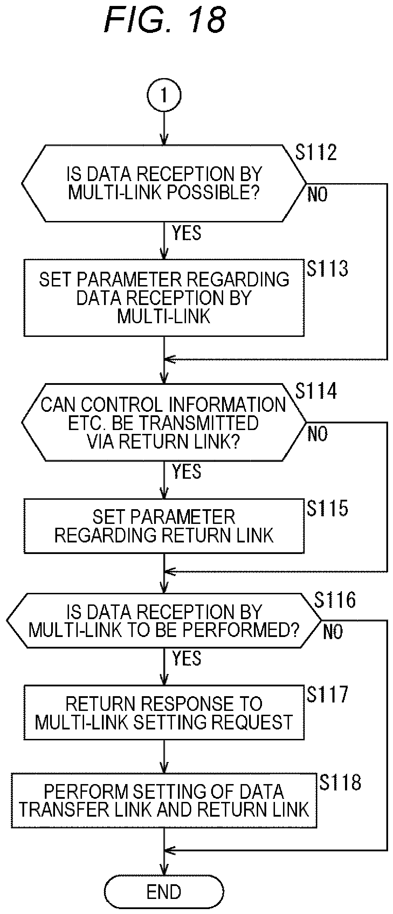

First, multi-link setting processing executed by the wireless communication apparatus 101 will be described with reference to flowcharts in Figs. 17 and 18.

In step S101, the link manager 203 acquires information regarding a link configured to be set. For example, the link manager 203 acquires information regarding a link that is usable to the wireless communication apparatus 101 from the transmitter-receiver 207 via the access controller 206. In addition, the link manager 203 acquires settable information regarding the multi-link of the wireless communication apparatus 101 and settable information regarding the return link from the device control module 113 via the interface 201.

In step S102, the device control module 113 determines whether or not to perform data transmission. For example, the device control module 113 determines whether or not to perform data transmission as the transmission side communication apparatus on the basis of input information supplied from the information input module 112. In a case where it is determined not to perform data transmission as the transmission side communication apparatus, the processing proceeds to step S103.

In step S103, the link manager 203 determines whether or not multi-link setting has been requested. In a case where it is determined that the multi-link setting has not been requested, the processing returns to step S101.

Thereafter, the processing of steps S101 to S103 is repeatedly executed until it is determined in step S102 to perform data transmission or it is determined in step S103 that multi-link setting has been requested.

On the other hand, in a case where it is determined in step S102 to perform data transmission as the transmission side communication apparatus, the processing proceeds to step S104.

In step S104, the link manager 203 determines whether or not the operation by the MLO is possible. Specifically, the device control module 113 instructs, via the interface 201, the link manager 203 to perform data transmission as the transmission side communication apparatus. The link manager 203 determines whether or not the wireless communication apparatus 101 can operate by the MLO, and in a case where it is determined that the wireless communication apparatus can operate by the MLO, the processing proceeds to step S105.

In step S105, the link manager 203 sets a data transfer link candidate. For example, the link manager 203 extracts a link capable of performing data transmission by multi-link from among links that are usable to the wireless communication apparatus 101, and sets the extracted link as a data transfer link candidate.

In step S106, the link manager 203 determines whether or not the link corresponds to a return link. The link manager 203 determines whether or not the wireless communication apparatus 101 corresponds to the return link, and in a case where it is determined that the wireless communication apparatus corresponds to the return link, the processing proceeds to step S107.

In step S107, the link manager 203 sets a return link candidate. For example, the link manager 203 extracts a link that is usable as a return link from among the data transfer link candidates set in the processing of step S105, and sets the extracted link as a return link candidate.

Thereafter, the processing proceeds to step S108.

On the other hand, in a case where it is determined in step S106 that the wireless communication apparatus 101 does not correspond to the return link, the processing of step S107 is skipped, and the processing proceeds to step S108.

In step S108, the link manager 203 determines whether or not the setting of the link candidate has been completed. In a case where it is determined that the setting of the link candidate has not been completed, the processing returns to step S104.

Thereafter, the processing of steps S104 to S108 is repeatedly executed until it is determined in step S104 that the wireless communication apparatus 101 cannot operate by the MLO or it is determined in step S108 that the setting of the link candidates has been completed.

On the other hand, in a case where it is determined in step S108 that the setting of the link candidates has been completed, the processing proceeds to step S109.

In step S109, the wireless communication apparatus 101 requests the multi-link setting. Specifically, the link manager 203 supplies information regarding the set link candidate to the transmission frame constructor 205 via the transmission manager 204.

For example, the transmission frame constructor 205 generates a Multi-Link Setup Request frame (Fig. 10) in which link candidates are set.

For example, the number of data transfer link candidates is set as Number of Multi Links of the Multi-Link Setup Request frame. A channel number of each of the data transfer link candidates is set as the Ch. No. In a case where the link corresponds to the return link, a channel number of the return link candidates is set as the Reverse Links.

A feedback timing (a transmission timing of a block ACK frame) in the return link requested by the wireless communication apparatus 101 is set as the Feedback Timing. A type of feedback requested by the wireless communication apparatus 101 among the ACK information and the NACK information is set as the ACK/NACK. A value indicating whether or not to retransmit data by multi-link is set as the Multi Links Retransmit.

The transmission frame constructor 205 supplies the generated Multi-Link Setup Request frame to the transmission signal processor 231.

The transmission signal processor 231 performs various signal processing such as encryption on the Multi-Link Setup Request frame and generates a transmission signal. The transmission signal processor 231 transmits the generated transmission signal to the reception side communication apparatus via one of the transmission-reception antenna 208 or an accessible link.

In step S110, the reception frame analyzer 209 determines whether or not a response to the multi-link setting request has been received. In a case where it is determined that a response to the multi-link setting request has not been received, the processing returns to step S109.

Thereafter, the processing of steps S109 and S110 is repeatedly executed until it is determined in step S110 that a response to the multi-link setting request has been received. Note that, for example, in a case where a response to the multi-link setting request cannot be received within a predetermined time, the multi-link setting processing ends.

On the other hand, in a case where it is determined in step S110 that a response to the multi-link setting request has been received, the processing proceeds to step Sill.

Specifically, for example, in a case of receiving the transmission signal including the Multi-Link Setup Request frame transmitted in the processing of step S110, the reception side communication apparatus transmits the reception signal including the Multi-Link Setup Response frame.

On the other hand, the reception signal processor 241 receives the reception signal via the link and the transmission-reception antenna 208 used for transmitting the transmission signal including the Multi-Link Setup Request frame. The reception signal processor 241 performs various signal processing such as decoding on the reception signal, and extracts a Multi-Link Setup Response frame from the reception signal. The reception signal processor 241 supplies the extracted Multi-Link Setup Response frame to the reception frame analyzer 209.

The reception frame analyzer 209 analyzes the Multi-Link Setup Response frame. In a case where the reception frame analyzer 209 determines, as a result of the analysis, that the Multi-Link Setup Response frame is a Multi-Link Setup Response frame corresponding to the Multi-Link Setup Request frame transmitted in the processing of step S109, the processing proceeds to step S111.

In step S111, the link manager 203 performs setting of the data transfer link and the return link. Specifically, the reception frame analyzer 209 extracts a Multi-Link Information Element from the Multi-Link Setup Response frame, and supplies the Multi-Link Information Element to the link manager 203 via the reception manager 210.

The link manager 203 sets a link other than the return link among the data transfer links indicated in the Ch. No. of the Multi-Link Information Element as a link used for data transmission. The link manager 203 sets a return link indicated in the Reverse Links of the Multi-Link Information Element as a link for receiving control information.

Thereafter, the multi-link setting processing ends.

On the other hand, in a case where it is determined in step S104 that the wireless communication apparatus 101 cannot operate by the MLO, the processing in steps S105 to Sill is skipped, and the multi-link setting processing ends.

In addition, in a case where it is determined in step S103 that the setting of the multi-link is requested, the processing proceeds to step S113.

Specifically, for example, in a case where the transmission side communication apparatus transmits a transmission signal including a Multi-Link Setup Request frame to the wireless communication apparatus 101, the reception signal processor 241 receives the transmission signal as a reception signal via the transmission-reception antenna 208. The reception signal processor 241 performs various signal processing such as decoding on the reception signal, and extracts a Multi-Link Setup Request frame from the reception signal. The reception signal processor 241 supplies the extracted Multi-Link Setup Request frame to the reception frame analyzer 209.

The reception frame analyzer 209 analyzes the Multi-Link Setup Request frame. Then, in a case where the received frame is a Multi-Link Setup Request frame addressed to the wireless communication apparatus 101, the reception frame analyzer 209 determines that the multi-link setting is requested, and the processing proceeds to step S112.

In this case, the wireless communication apparatus 101 operates as a reception side communication apparatus.

In step S112, the link manager 203 determines whether or not data reception by the multi-link is possible. Specifically, the reception frame analyzer 209 extracts a Multi-Link Information Element from the Multi-Link Setup Request frame, and supplies the Multi-Link Information Element to the link manager 203 via the reception manager 210.

The link manager 203 determines whether or not the data reception by the multi-link is possible by using at least a part of the data transfer link candidates indicated in the Ch. No. of the Multi-Link Information Element on the basis of the settable information regarding the multi-link of the wireless communication apparatus 101. In a case where it is determined that data reception by multi-link is possible, the processing proceeds to step S113.

In step S113, the link manager 203 sets a parameter regarding data reception by the multi-link. Specifically, the link manager 203 sets the link determined to be capable of data reception in the processing of step S112 as the data transfer link. The link manager 203 acquires information regarding the set use state of the data transfer link from the transmitter-receiver 207 via the access controller 206. The link manager 203 sets a parameter necessary for data reception on the basis of the use status of the data transfer link, the capacity of the reception buffer 211, and the like.

Thereafter, the processing proceeds to step S114.

On the other hand, in a case where it is determined in step S112 that data reception by multi-link is not possible, the processing in step S113 is skipped, and the processing proceeds to step S114.

In step S114, the link manager 203 determines whether or not control information and the like can be transmitted via the return link. Specifically, the link manager 203 determines whether or not control information and the like can be transmitted by using one of the data transfer links set in the processing of step S113 as a return link on the basis of the settable information regarding the return link of the wireless communication apparatus 101. In a case where it is determined that the control information and the like can be transmitted by using one of the links for data transfer as the return link, the processing proceeds to step S115.

In step S115, the link manager 203 sets a parameter regarding the return link. Specifically, the link manager 203 sets one of the data transfer links determined to be usable in the processing of step S114 as the return link. The link manager 203 sets a parameter necessary for transmission of a control signal or the like on the basis of the use state of the return link or the like.

Thereafter, the processing proceeds to step S106.

On the other hand, in a case where it is determined in step S114 that the control information and the like cannot be transmitted via the return link, the processing of step S115 is skipped, and the processing proceeds to step S116.

In step S116, the link manager 203 determines whether or not to perform data reception by the multi-link. In a case where the link manager 203 determines to finally perform data reception by the multi-link on the basis of the above-described processing, the processing proceeds to step S117.

In step S117, the wireless communication apparatus 101 returns a response to the multi-link setting request. Specifically, the link manager 203 supplies information regarding the set data transfer link, return link, and parameter to the transmission frame constructor 205 via the transmission manager 204.

For example, the transmission frame constructor 205 generates a Multi-Link Setup Response frame corresponding to the Multi-Link Setup Request frame received in the processing of step S103.

For example, the number of data transfer links to be used is set as the Number of Multi Links of the Multi-Link Setup Request frame. A channel number of each of the data transfer links and the return links to be used are set as the Ch. No. In a case where the return link can be set, the channel number of the return link to be used is set as the Reverse Links.

The same parameter as a parameter of the Feedback Timing of the Multi-Link Setup Request frame is set as the Feedback Timing. The same parameter as a parameter of the ACK/NACK of the Multi-Link Setup Request frame is set as the ACK/NACK. For example, the size of the reception buffer 211 is set as Buffer Size. A length of the Block Ack Bitmap of the block ACK frame is set as the ACK Bitmap Length. The same parameter as a parameter of the Multi Links Retransmit in the Multi-Link Setup Request frame is set as Multi Links Retransmit.

The transmission frame constructor 205 supplies the generated Multi-Link Setup Response frame to the transmission signal processor 231.

The transmission signal processor 231 performs various signal processing such as encryption on the Multi-Link Setup Response frame and generates a transmission signal. The transmission signal processor 231 transmits the generated transmission signal to the transmission side communication apparatus via the transmission-reception antenna 208 and the link that has received the Multi-Link Setup Request frame.

In step S118, the link manager 203 performs setting of the data transfer link and the return link. Specifically, the link manager 203 sets the data transfer link set by the above-described processing as a link for data reception. The link manager 203 sets the return link set by the above-described processing as a link for returning control information and the like.

Thereafter, the multi-link setting processing ends.

On the other hand, in a case where it is determined in step S116 that data reception by the multi-link is not performed, the processing in steps S117 and S118 is skipped, and the multi-link setting processing ends.

### <Data transmission processing>

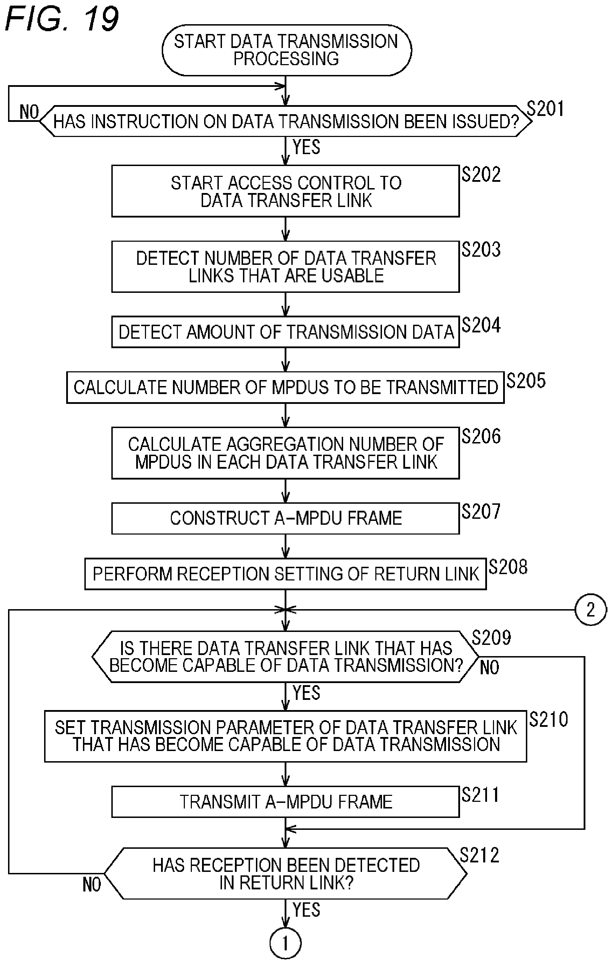

Next, data transmission processing executed by the wireless communication apparatus 101 will be described with reference to Fig. 19. That is, processing in a case where the wireless communication apparatus 101 transmits data to the reception side communication apparatus as a transmission side communication apparatus will be described.

In step S201, the device control module 113 determines whether or not data transmission has been instructed. The device control module 113 determines whether or not data transmission is instructed on the basis of the input information supplied from the information input module 112. This determination processing is repeatedly executed until it is determined that the data transmission has been instructed, and in a case where it is determined that the data transmission has been instructed, the processing proceeds to step S202.

In step S202, each transmission signal processor 231 starts access control to the data transfer link. Specifically, the device control module 113 instructs the wireless communication module 115 to transmit data. The link manager 203 notifies the access controller 206 of an instruction to transmit data having been issued. Under the control of the access controller 206, each transmission signal processor 231 performs carrier sensing on each data transfer link set in the multi-link setting processing described above, and starts access control such as checking a use state or setting a backoff time.

In step S203, the access controller 206 detects the number of data transfer links that are usable on the basis of a result of the processing in step S202.

In step S204, the transmission manager 204 detects an amount of transmission data. Specifically, the transmission manager 204 detects an amount of data stored in the transmission buffer 202 as data to be transmitted to the reception side communication apparatus.

In step S205, the transmission manager 204 calculates the number of MPDUs to be transmitted on the basis of the detected amount of transmission data. That is, the transmission manager 204 calculates the number of MPDUs in a case where the transmission data stored in the transmission buffer 202 is divided and transmitted to the MPDUs.

In step S206, the transmission manager 204 calculates an aggregation number of the MPDUs in each data transfer link. For example, the transmission manager 204 divides the number of MPDUs calculated in the processing of step S205 by the number of data transfer links used to transmit data to calculate the number of MPDUs transmitted via each of the data transfer links (the aggregation number).

In addition, the transmission manager 204 allocates a sequence number in ascending order to each of the MPDUs. Furthermore, the transmission manager 204 divides each of the MPDUs into a plurality of sets for every data transfer link used for transmission.

In step S207, the transmission frame constructor 205 constructs an A-MPDU frame. Specifically, the transmission manager 204 acquires the transmission data from the transmission buffer 202 and supplies the transmission data to the transmission frame constructor 205. Furthermore, the transmission manager 204 supplies information regarding the sets of MPDUs divided for every data transfer link to the transmission frame constructor 205.

The transmission frame constructor 205 divides the transmission data into MPDUs. In addition, the transmission frame constructor 205 constructs a plurality of A-MPDU frames by aggregating MPDUs included in each set of MPDUs divided for every data transfer link for each set. The transmission frame constructor 205 supplies each A-MPDU frame to the corresponding transmission signal processor 231.

In step S208, the access controller 206 performs reception setting of the return link. Specifically, the reception signal processor 242 sets reception of the return link for receiving control information and the like via the transmission-reception antenna 208 under the control of the access controller 206.

In step S209, each of the transmission signal processors 231 determines whether or not there is a data transfer link that has become capable of data transmission. Specifically, in a case where not having started transmission of the A-MPDU, each transmission signal processor 231 determines whether or not the data transmission of the corresponding data transfer link has become possible. For example, in a case where the at least one of the transmission signal processors 231 determines that the corresponding data transfer link has become accessible after a lapse of a predetermined backoff time and capable of data transmission, the processing proceeds to step S210.

In step S210, the transmission signal processor 231 sets a transmission parameter of the data transfer link that has become capable of the data transmission. For example, the transmission signal processor 231 sets Duration or the like of the A-MPDU frame in the data transfer link that has become capable of data transmission.

In step S211, the transmission signal processor 231 transmits the A-MPDU frame. That is, the transmission signal processor 231 corresponding to the data transfer link that has become capable of data transmission performs predetermined signal processing such as encryption on the corresponding A-MPDU frame and generates a transmission signal. The transmission signal processor 231 starts transmission of the transmission signal to the reception side communication apparatus via the transmission-reception antenna 208 and the corresponding data transfer link.

Thereafter, the processing proceeds to step S212.

On the other hand, in a case where none of the transmission signal processors 231 determines in step S209 that the corresponding data transfer link has become capable of transmission, the processing in steps S210 and S211 is skipped, and the processing proceeds to step S212.

In step S212, the reception signal processor 242 determines whether or not reception has been detected in the return link. In a case where it is determined that reception has not been detected in the return link, the processing returns to step S209.

Thereafter, the processing of steps S209 to S212 is repeatedly executed until it is determined in step S212 that reception has been detected in the return link.

On the other hand, in step S212, in a case where any reception signal is received via the return link and the transmission-reception antenna 208, the reception signal processor 242 determines that reception has been detected in the return link, and the processing proceeds to step S213.

In step S213, the reception frame analyzer 209 determines whether or not self-addressed control information is included. Specifically, the reception signal processor 242 performs various signal processing such as decoding on the received reception signal and extracts a control information frame from the reception signal. The reception signal processor 242 supplies the extracted control information frame to the reception frame analyzer 209.

The reception frame analyzer 209 analyzes the acquired control information frames. In a case where the control information frame is a block ACK frame addressed to the wireless communication apparatus 101, the reception frame analyzer 209 determines that the control information frame includes self-addressed control information, and the processing proceeds to step S214.

In step S214, the reception manager 210 determines whether or not ACK information or NACK information has been acquired. Specifically, the reception frame analyzer 209 extracts the BA Information from the received block ACK frame. The reception frame analyzer 209 supplies the extracted BA Information to the reception manager 210. The reception manager 210 supplies the acquired BA Information to the transmission manager 204 via the link manager 203.

In a case where the acquired BA Information is the above-described BA Information of the block ACK frame in Fig. 14 or 15, the reception manager 210 determines that ACK information has been acquired, and the processing proceeds to step S215.

In step S215, the transmission manager 204 detects a range of normally received data. The transmission manager 204 detects a range of MPDUs normally received by the reception side communication apparatus among the MPDUs to be transmitted to the reception side communication apparatus on the basis of the Block Ack Bitmap included in the BA Information.

In step S216, the transmission manager 204 determines whether or not all the data has been normally received on the basis of a result of the processing in step S217. In a case where there is an MPDU that has not been normally received by the reception side communication apparatus yet, the transmission manager 204 determines that not all the data has been normally received yet, and the processing proceeds to step S217.

On the other hand, in step S214, in a case where the acquired BA Information is the BA Information of the block ACK frame in Fig. 16, the reception manager 210 determines that NACK information has been acquired. Then, the processing in steps S215 and S216 is skipped, and the processing proceeds to step S217.

In step S217, the transmission manager 204 identifies undelivered data on the basis of the acquired BA Information. That is, the transmission manager 204 identifies the sequence number of the MPDU that has not been delivered due to occurrence of a reception error.

In step S218, the transmission manager 204 determines whether or not there is undelivered data on the basis of the result of the processing in step S217. In a case where it is determined that there is undelivered data, the processing proceeds to step S219.

In step S219, the transmission frame constructor 205 constructs a retransmission frame of the undelivered data. The transmission manager 204 acquires data included in the MPDU that has not been delivered from the transmission buffer 202 and supplies the data to the transmission frame constructor 205.

The transmission frame constructor 205 constructs the A-MPDU frame including the MPDU as a retransmission frame. For example, the transmission frame constructor 205 supplies the retransmission frame to the transmission signal processor 231 corresponding to the data transfer link used to transmit the MPDU.

In step S220, the transmission signal processor 231 that has acquired the retransmission frame sets a backoff time. Specifically, the transmission signal processor 231 sets a predetermined backoff time in the corresponding data transfer link under the control of the access controller 206.

In step S221, the transmission signal processor 231 determines whether or not the timing is a timing at which the retransmission frame can be transmitted. This determination processing is repeatedly executed until it is determined that the timing is a timing at which the retransmission frame can be transmitted, and in a case where it is determined that the timing is a timing at which the retransmission frame can be transmitted, the processing proceeds to step S222.

In step S222, the transmission signal processor 231 transmits the retransmission frame. That is, the transmission signal processor 231 transmits a transmission signal including the retransmission frame via the transmission-reception antenna 208 and the corresponding data transfer link by processing similar to step S211 described above.

Thereafter, the processing returns to step S209, and the processing of steps S209 to S222 is repeatedly executed until it is determined in step S216 that all the data has been normally received.

On the other hand, in a case where it is determined in step S216 that all the data has been normally received, the data transmission processing ends.

### <Data reception processing>

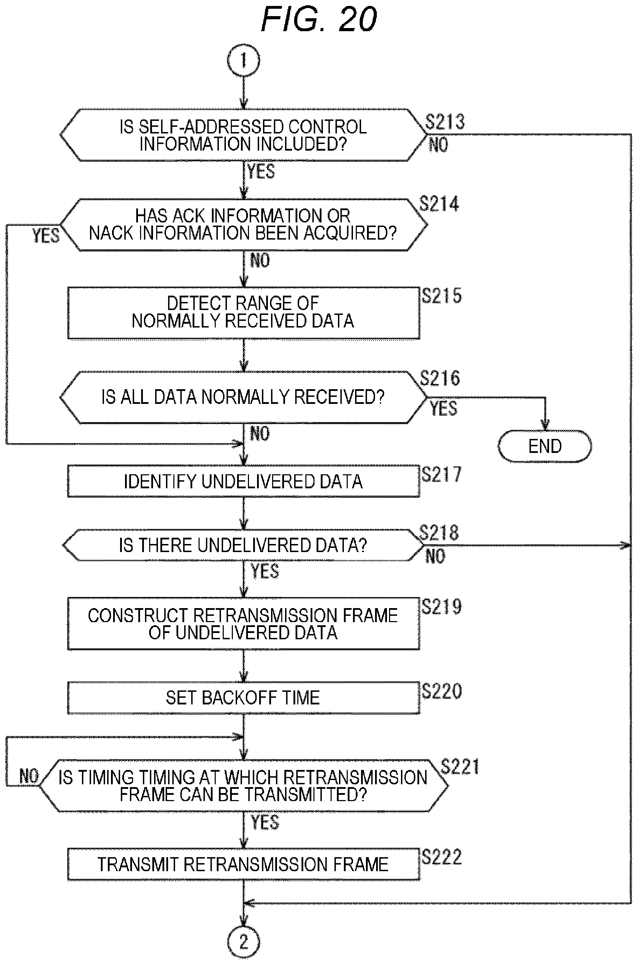

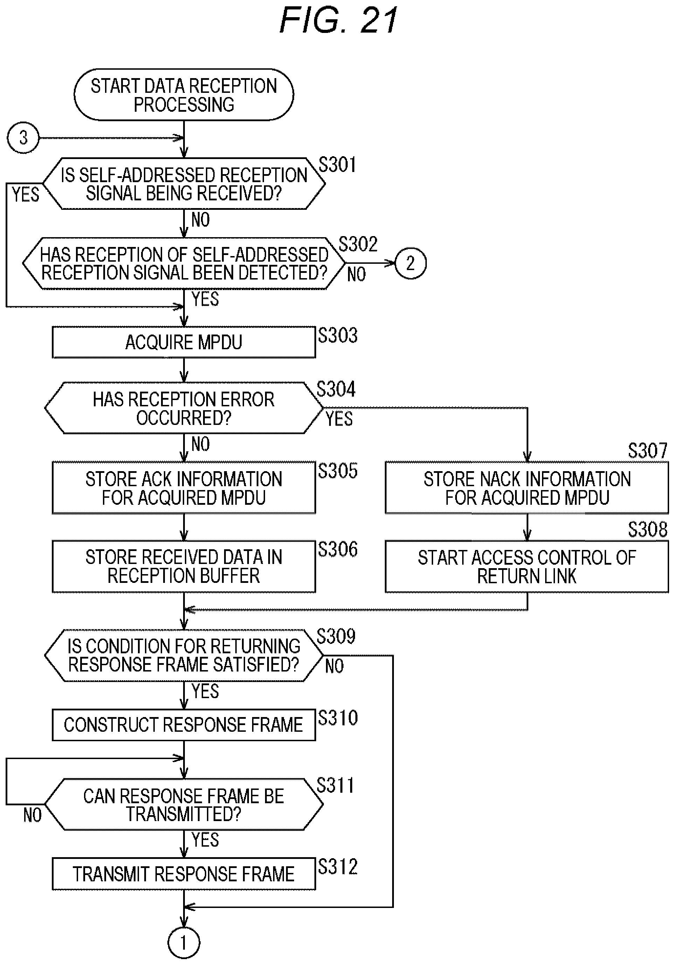

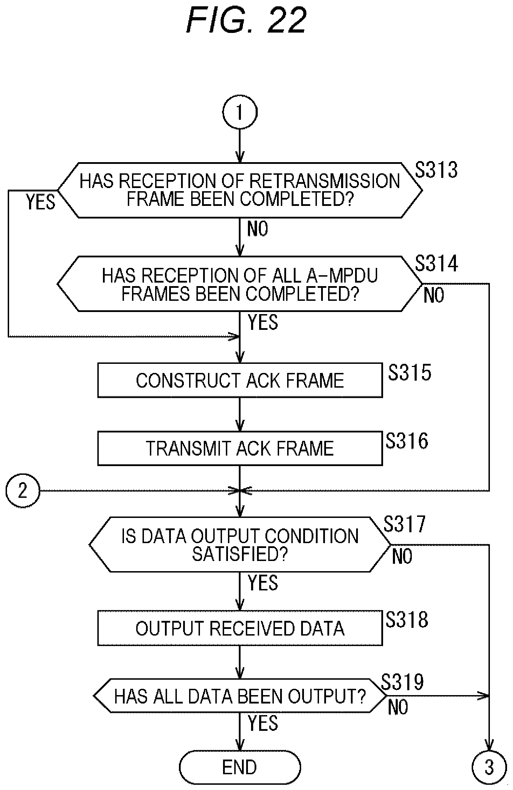

Next, data reception processing executed by the wireless communication apparatus 101 as a reception side communication apparatus corresponding to the data transmission processing of Figs. 19 and 20 will be described with reference to flowcharts of Figs. 21 and 22.

In step S301, each of the reception signal processors 241 determines whether or not a self-addressed reception signal is being received. In a case where any of the reception signal processors 241 determines that a self-addressed reception signal (addressed to the wireless communication apparatus 101) is not being received, the processing proceeds to step S302.

In step S302, each of the reception signal processors 241 determines whether or not a self-addressed reception signal has been detected. In a case where any of the reception signal processors 242 determines that the self-addressed reception signal (addressed to the wireless communication apparatus 101) has been detected via the corresponding data transfer link and the transmission-reception antenna 208, the processing proceeds to step S303.

On the other hand, in step S301, in a case where at least one of the reception signal processors 241 determines that a self-addressed reception signal (addressed to the wireless communication apparatus 101) is being received via the corresponding data transfer link and transmission-reception antenna 208, the processing of step S302 is skipped, and the processing proceeds to step S303.

In step S303, the reception signal processor 241 acquires the MPDU. Specifically, the reception signal processor 241 that has received the self-addressed reception signal performs predetermined signal processing such as decoding in order from the top of the reception signal. The reception signal processor 241 supplies the obtained A-MPDU frame (including the retransmission frame) to the reception frame analyzer 209 in order from the top.

The reception frame analyzer 209 extracts the MPDUs in order from the top of the A-MPDU frame on the basis of the Length of the Delimiter of each A-MPDU Subframe of the A-MPDU frame.

In step S304, the reception frame analyzer 209 determines whether or not a reception error has occurred. In a case where the MPDU acquired in the processing of step S303 is normal, the reception frame analyzer 209 determines that no reception error has occurred, and the processing proceeds to step S305.

In step S305, the reception manager 210 stores ACK information for the acquired MPDU. Specifically, the reception frame analyzer 209 supplies the acquired MPDU to the reception manager 210 and gives notification that the MPDU is normal. The reception manager 210 stores ACK information including the sequence number of the MPDU and indicating that the MPDU has been received.

In step S306, the reception manager 210 stores received data in the reception buffer 211. Specifically, the reception manager 210 extracts data stored in the Frame Body of the acquired MPDU, and stores the data in the reception buffer 211.

Thereafter, the processing proceeds to step S309.

On the other hand, in step S304, in a case where an abnormality has occurred in the MPDU acquired in the processing of step S303, the reception frame analyzer 209 determines that a reception error has occurred, and the processing proceeds to step S307.

In step S307, the reception manager 210 stores NACK information for the acquired MPDU. Specifically, the reception frame analyzer 209 notifies the reception manager 210 that a reception error of the acquired MPDU has occurred. The reception manager 210 stores NACK information including the sequence number of the MPDU and indicating that the MPDU has not been delivered.

In step S308, the transmission signal processor 232 starts access control of the return link. Specifically, the reception manager 210 notifies the access controller 206 and the transmission manager 204 that a reception error of the MPDU has occurred via the link manager 203. Under the control of the access controller 206, the transmission signal processor 232 starts access control such as setting a predetermined backoff time for the return link.

Thereafter, the processing proceeds to step S309.

In step S309, the transmission manager 204 determines whether or not a condition for returning a response frame is satisfied. In a case where the transmission manager 204 determines that a condition for returning a predetermined response frame is satisfied, for example, in a case where a predetermined return timing has come, a case where the number of pieces of undelivered data has reached a predetermined number, or the like, the processing proceeds to step S310.

In step S310, the transmission frame constructor 205 constructs a response frame. Specifically, the transmission manager 204 acquires ACK information and NACK information from the reception manager 210 via the link manager 203. The transmission manager 204 supplies the acquired ACK information and NACK information to the transmission frame constructor 205.

The transmission frame constructor 205 constructs the block ACK frame in Fig. 12, 13, or 16 on the basis of the acquired ACK information and NACK information. The transmission frame constructor 205 supplies the constructed block ACK frame to the transmission signal processor 232.

In step S311, the transmission signal processor 232 determines whether or not the response frame can be transmitted. This determination processing is repeatedly executed until it is determined that the response frame can be transmitted. Then, for example, in a case where a predetermined backoff time elapses and access to the return link has become possible, the transmission signal processor 232 determines that the response frame can be transmitted, and the processing proceeds to step S312.

In step S312, the transmission signal processor 232 transmits the response frame. Specifically, the transmission signal processor 232 performs predetermined signal processing such as encryption on the block ACK frame and generates a transmission signal. The transmission signal processor 232 transmits the generated transmission signal to the transmission side communication apparatus via the transmission-reception antenna 208 and the return link.

Thereafter, the processing proceeds to step S313.

On the other hand, in a case where it is determined in step S309 that the condition for returning the response frame is not satisfied, the processing in steps S310 to S312 is skipped, and the processing proceeds to step S313.

In step S313, the reception manager 210 determines whether or not reception of the retransmission frame has been completed. In a case where it is not determined that the reception of the retransmission frame has been completed, the processing proceeds to step S314.

Here, for example, in a case where the retransmission frame has been just received up to the end, it is determined that reception of the retransmission frame has been completed. On the other hand, for example, in a case where the retransmission frame is being received, in a case where the retransmission frame is not received, and in a case where the retransmission frame has already been received to the end, it is not determined that the reception of the retransmission frame has been completed.

In step S314, the reception manager 210 determines whether or not reception of all the A-MPDU frames has been completed. In a case where it is determined that the reception of all the A-MPDU frames has been completed, the processing proceeds to step S315.

Here, for example, in a case where the A-MPDU frame transmitted last among the A-MPDU frames transmitted via each data transfer link has been just received, it is determined that the reception of all the A-MPDU frames has been completed. On the other hand, for example, in a case where there is an A-MPDU that has not been received to the end, and in a case where all the A-MPDU frames already transmitted via the respective data transfer links have been received to the end, it is not determined that the reception of all the A-MPDU frames has been completed.

On the other hand, in a case where it is determined in step S313 that the reception of the retransmission frame has been completed, the processing of step S314 is skipped, and the processing proceeds to step S315.

In step S315, the transmission frame constructor 205 constructs an ACK frame. Specifically, the reception manager 210 supplies ACK information and NACK information of all the MPDUs to the transmission manager 204 via the link manager 203.

The transmission manager 204 supplies the acquired ACK information and NACK information to the transmission frame constructor 205 and instructs construction of the ACK frame.

The transmission frame constructor 205 constructs the block ACK frame in Fig. 12 or 13 on the basis of the acquired ACK information and NACK information. The transmission frame constructor 205 supplies the constructed block ACK frame to the transmission signal processor 232.

Furthermore, in a case where the reception of the retransmission frame has been completed, the transmission frame constructor 205 supplies the constructed block ACK frame to the transmission signal processor 231 corresponding to the data transfer link used to receive the retransmission frame. On the other hand, in a case where the reception of all the A-MPDU frames has been completed, the transmission frame constructor 205 supplies the constructed block ACK frame to the transmission signal processor 231 corresponding to the data transfer link (for example, the link 3 in Fig. 8) in which the reception of the A-MPDU frame is completed last.

In step S316, the transmitter 221 transmits the ACK frame at a predetermined timing.

Specifically, the transmission signal processor 231 that has acquired the block ACK frame transmits a transmission signal including the block ACK frame to the transmission side communication apparatus via the transmission-reception antenna 208 and the corresponding data transfer link by processing similar to step S312 described above. In addition, the transmission signal processor 232 that has acquired the block ACK frame transmits a transmission signal including the block ACK frame to the transmission side communication apparatus via the transmission-reception antenna 208 and the return link by processing similar to step S312 described above.

Therefore, for example, in a similar manner to the block ACK frame C in Fig. 8, the block ACK frame including the ACK information of all the MPDUs is transmitted via the data transfer link and the return link.

Thereafter, the processing proceeds to step S317.

On the other hand, in a case where it is determined in step S314 that the reception of all the A-MPDU frames has not been completed, the processing in steps S315 and S316 is skipped, and the processing proceeds to step S317.

In addition, in a case where it is determined in step S302 that reception of a self-addressed reception signal is not detected, the processing proceeds to step S317. This is a case where none of the reception signal processors 241 receives a self-addressed reception signal.

In step S317, the interface 201 determines whether or not a data output condition is satisfied. In a case where it is determined that the data output condition is not satisfied, the processing returns to step S301.

Thereafter, the processing of steps S301 to S317 is repeatedly executed until it is determined in step S317 that the data output condition is satisfied.

On the other hand, in a case where it is determined in step S317 that the data output condition is satisfied, the processing proceeds to step S318.

In step S318, the interface 201 outputs received data. Specifically, the interface 201 acquires received data from the reception buffer 211 and supplies the received data to the device control module 113.

In step S319, the interface 201 determines whether or not all the data has been output. In a case where the interface 201 determines that not all the data has been output yet, the processing returns to step S301.

Thereafter, the processing of steps S301 to S319 is repeatedly executed until it is determined in step S319 that all the data has been output.

On the other hand, in a case where it is determined in step S319 that all the data has been output, the data reception processing ends.

### <Modification of communication method of wireless communication apparatus 101>

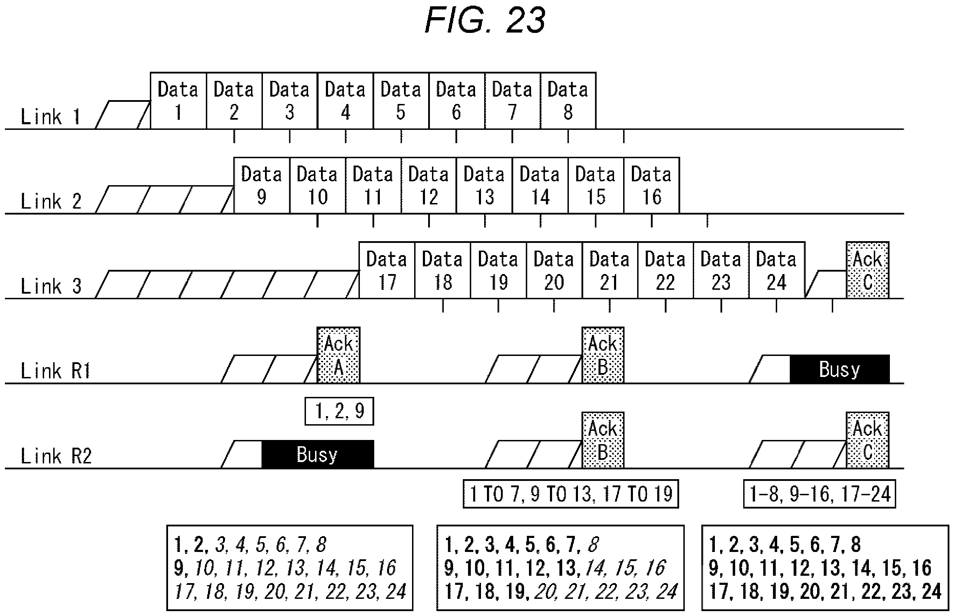

Next, a modification of the communication method of the wireless communication apparatus 101 will be described with reference to Figs. 23 to 25.

### <First modification of communication method of wireless communication apparatus 101>

First, a first modification of the communication method of the wireless communication apparatus 101 will be described with reference to Fig. 23.

Fig. 23 is a diagram illustrating a flow of data in a case where the data is transferred between two wireless communication apparatuses 101 by using the MLO in a similar manner to Fig. 8.

The first modification is different from the first embodiment described above with reference to Figs. 8 to 13 in that a plurality of return links is provided. Specifically, in the first modification, the links 1 to 3 are set as data transfer links, and links R1 and R2 are set as return links.

Note that processing other than returning the block ACK frame via the return link is similar to processing according to the first embodiment, and the description thereof will be appropriately omitted.

The reception side communication apparatus returns a block ACK frame by using the links R1 and R2.

Specifically, in the first modification, block ACK frames A to C similar to the block ACK frames A to C of the first embodiment are returned at a similar timing to the timing of the first embodiment.

At the timing of returning the block ACK frame A, the link R1 is usable, and the link R2 is in a busy state. Therefore, the block ACK frame A is returned by using only the link R1.

Both the links R1 and R2 are usable at the timing of returning the block ACK frame B. Therefore, the same block ACK frame B is returned by using both the links R1 and R2.

At the timing of returning the block ACK frame C, the link R2 is usable, and the link R1 is in a busy state. Therefore, the block ACK frame C is returned by using only the link R2.

As a result, for example, even when a specific frequency channel (for example, the link R1 or R2) is congested, it is possible to return the block ACK frame reliably and quickly.

### <Second modification of communication method of wireless communication apparatus 101>

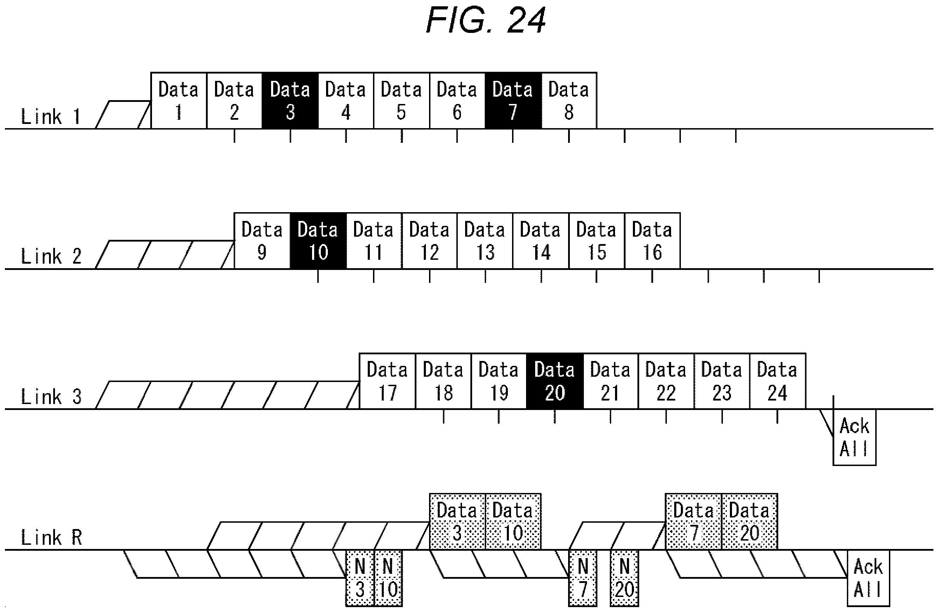

Next, a second modification of the communication method of the wireless communication apparatus 101 will be described with reference to Fig. 24.

Fig. 24 is a diagram illustrating a flow of data in a case where the data is transferred between two wireless communication apparatuses 101 by using the MLO in a similar manner to Fig. 8.

The second modification is different from the second embodiment described above with reference to Figs. 14 to 16 in that a retransmission frame is transferred via a return link.

Note that processing other than transmission of the retransmission frame via the return link is similar to processing according to the second embodiment, and the description thereof will be appropriately omitted.

Specifically, in the second modification, in a similar manner to the second embodiment, the links 1 to 3 are set as data transfer links, and the link R is set as a return link.

Then, in a similar manner to the second embodiment, when the number of undelivered data reaches two, the block ACK data including the NACK information of the undelivered data is returned.

On the other hand, the transmission side communication apparatus generates the A-MPDU frame including the undelivered data and transmits the A-MPDU frame via the link R.

Specifically, after a reception error of the data 3 and a reception error of the data 10 occur, the reception side communication apparatus returns a block ACK frame including NACK information of the data 3 and 10 via the link R.

On the other hand, the transmission side communication apparatus generates an A-MPDU frame including the data 3 and 10 and transmits the A-MPDU frame via the link R.

Next, after a reception error of the data 7 and a reception error of the data 20 occur, the reception side communication apparatus returns a block ACK frame including NACK information of the data 7 and 20 via the link R.

On the other hand, the transmission side communication apparatus generates an A-MPDU frame including the data 7 and 20 and transmits the A-MPDU frame via the link R.

As a result, the transmission side communication apparatus can retransmit the undelivered data while transmitting the data via the data transfer link.

### <Third modification of communication method of wireless communication apparatus 101>

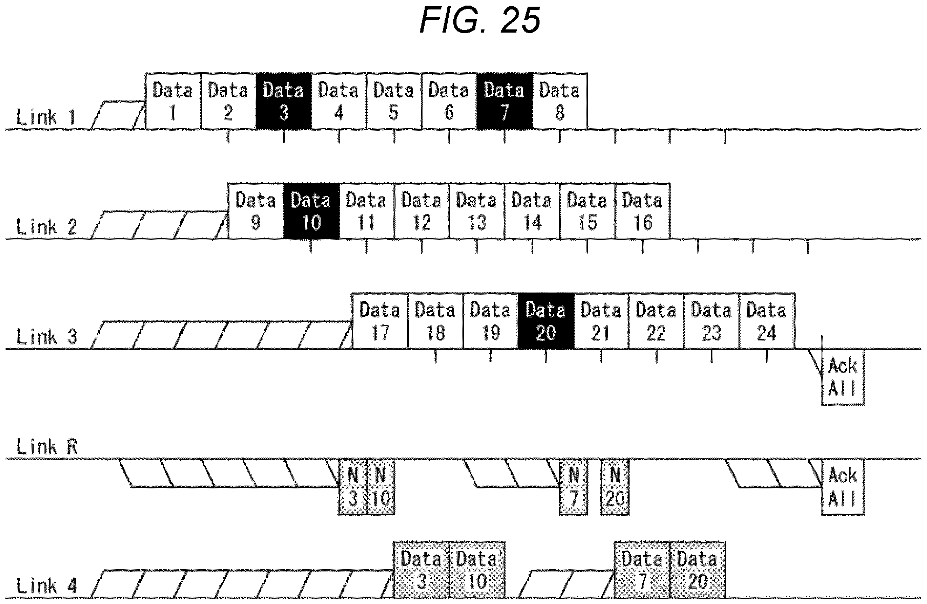

Next, a third modification of the communication method of the wireless communication apparatus 101 will be described with reference to Fig. 25.

Fig. 25 is a diagram illustrating a flow of data in a case where the data is transferred between two wireless communication apparatuses 101 by using the MLO in a similar manner to Fig. 8.

The third modification is different from the second modification in that a link for retransmission of undelivered data is provided.

Note that processing other than retransmission of the undelivered data is similar to the processing of the second modification, and the description thereof will be appropriately omitted.

Specifically, in the second modification, the links 1 to 4 are set as data transfer links, and the link R is set as a return link.

Then, in a case of receiving the block ACK frame including the NACK information, the transmission side communication apparatus generates an A-MPDU frame including the undelivered data and transmits the A-MPDU frame via the link 4.

Specifically, in a case of receiving the block ACK frame including the NACK information of the data 3 and 10, the transmission side communication apparatus generates an A-MPDU frame including the data 3 and 10. Then, the transmission side communication apparatus transmits the generated A-MPDU frame via the link 4.

Furthermore, in a case of receiving the block ACK frame including the NACK information of the data 7 and 20, the transmission side communication apparatus generates an A-MPDU frame including the data 7 and 20. Then, the transmission side communication apparatus transmits the generated A-MPDU frame via the link 4.

As a result, the transmission side communication apparatus can retransmit the undelivered data more reliably while transmitting the data via the data transfer link.

### <Frequency band used for multi-link>

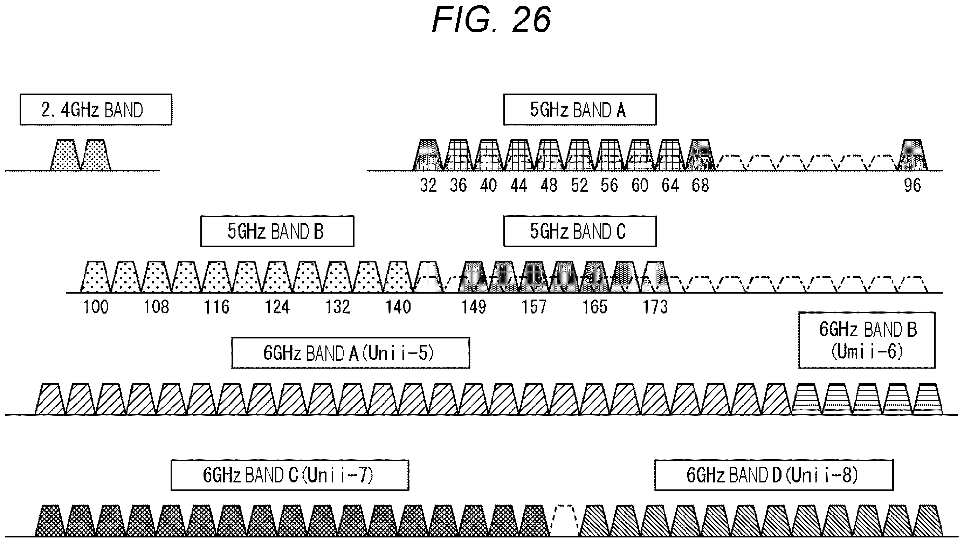

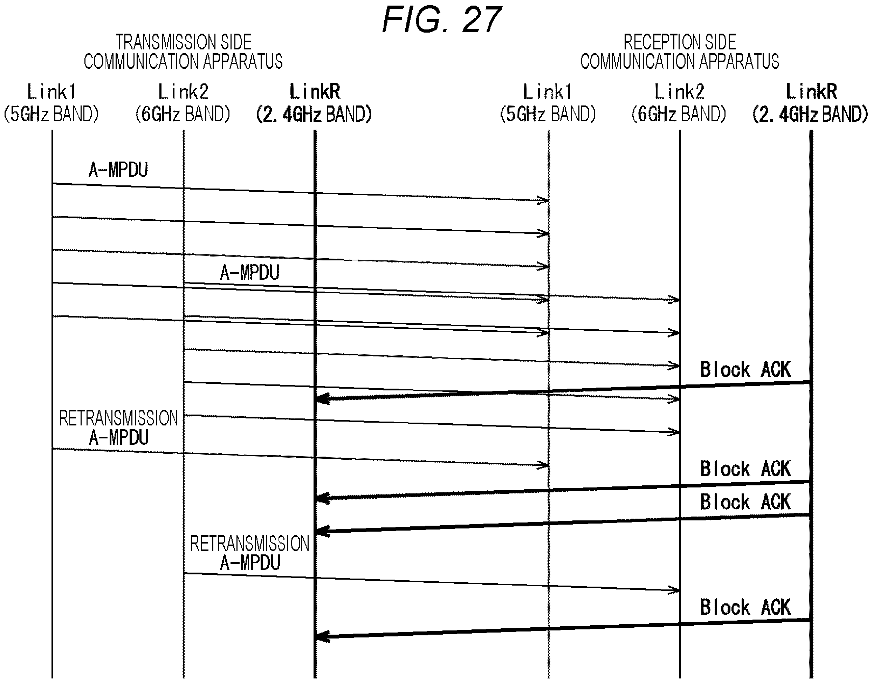

Next, an example of a frequency band used for multi-link will be described with reference to Figs. 26 and 27.

Fig. 26 illustrates an example of allocation of frequency bands and channels usable in the wireless LAN network 1.

In a 2.4 GHz band, a range of frequency band corresponding to at least two channels is usable by applying a wireless signal of an OFDM scheme having a 20 MHz bandwidth of the IEEE 802.11g standard.

In the 5 GHz band, a plurality of channels to be applied to a wireless signal of an OFDM scheme having a bandwidth of 20 MHz is usable in accordance with a standard such as IEEE 802.11a. However, operation in this frequency band is subjected to conditions for determining ability of transmission, such as a frequency range and transmission power available under the legal system of each country.

In addition, although channel numbers are given below the diagram of the 5 GHz band, eight channels including channels 36 to 64 and eleven channels including channels 100 to 140 are usable in Japan.

Note that, in the other countries and regions, channel 32, channel 68, channel 96, and channel 144 are also usable. Furthermore, in the above frequency band, channels 149 to 173 are usable.

In the 6 GHz band that is currently being standardized so as to be available, 25 channels in the UNII-5 band in a 6 GHz band A, 5 channels in the UNII-6 band in a 6 GHz band B, 17 channels in the UNII-7 band in a 6 GHz band C, and 12 channels in the UNII-8 band in a 6 GHz band D are usable.

Fig. 27 illustrates an example of frequency bands allocated to the data transfer link and the return link.

In this example, the links 1 and 2 are set as data transfer links, and the link R is set as a return link.

For example, a channel of the 5 GHz band is used for the link 1, and a channel of the 6 GHz band is used for the link 2. A channel of the 2.4 GHz band is used for the link R.

As a result, the frequency band of the data transfer link (the links 1 and 2) and the frequency band of the return link (the link R) in a direction opposite to the data transfer link are apart from each other by a predetermined space or more. Therefore, for example, even when the timing of transfer of the A-MPDU frame and the timing of transfer of the block ACK frame overlap, filtering processing facilitates separation between a signal including the A-MPDU frame and a signal including the block ACK frame.

As a result, even without adjustment to the timing of transfer of the A-MPDU frame and the timing of transfer of the block ACK frame, the A-MPDU frame and the block ACK frame interfere with each other, and probability of occurrence of a reception error decreases. As a result, for example, the number of times of retransmission of the A-MPDU frame can be reduced.

As described above, it is possible to promptly notify the transmission side communication apparatus of the reception status of the reception side communication apparatus. As a result, the transmission side communication apparatus can quickly recognize undelivered data and quickly take measures such as retransmission.

In addition, by providing a predetermined space or more between the frequency band of the data transfer link and the frequency band of the return link, it is possible to suppress occurrence of interference in transfer of the A-MPDU frame by the block ACK frame.

Furthermore, for example, by sharing a return link with another wireless communication apparatus by random access and returning control information in a case where the return link becomes usable, it is possible to eliminate the need to set a channel dedicated to the return link.

### <<3. Modifications>>

Hereinafter, modifications of the above-described embodiments of the present technology will be described.

For example, the aggregation number of A-MPDU frames, the number of data transfer links, the number of return links, and the aggregation number of A-MPDU frames can be changed as appropriate.

For example, the present technology can also be applied to a case where a frame other than the A-MPDU frame is transmitted.

### <<4. Others>>

### <Configuration example of computer>

The above series of processing can be executed by hardware or software. In a case where the series of processing is executed by software, a program constituting the software is installed in a computer. Here, the computer includes a computer incorporated in dedicated hardware, a general-purpose personal computer capable of executing various functions by installing various programs, and the like, for example.

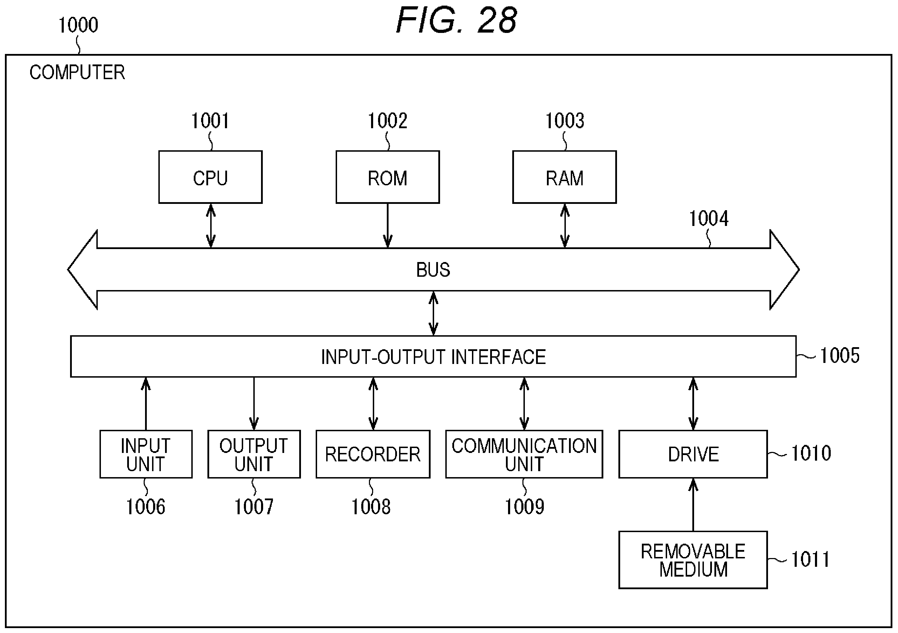

Fig. 28 is a block diagram illustrating a configuration example of hardware of a computer that executes the above series of processing by a program.

In a computer 1000, a central processing unit (CPU) 1001, a read only memory (ROM) 1002, and a random access memory (RAM) 1003 are mutually connected by a bus 1004.

An input-output interface 1005 is further connected to the bus 1004. An input unit 1006, an output unit 1007, a recorder 1008, a communication unit 1009, and a drive 1010 are connected to the input-output interface 1005.

The input unit 1006 includes an input switch, a button, a microphone, an imaging element, and the like. The output unit 1007 includes a display, a speaker, and the like. The storage 1008 includes a hard disk, a nonvolatile memory, and the like. The communication unit 1009 includes a network interface and the like. The drive 1010 drives a removable media 1011 such as a magnetic disk, an optical disk, a magneto-optical disk, or a semiconductor memory.

In the computer 1000 configured as described above, for example, the CPU 1001 loads a program recorded in the recorder 1008 into the RAM 1003 via the input-output interface 1005 and the bus 1004 and executes the program, and thus the above series of processing is performed.

The program executed by the computer 1000 (CPU 1001) can be provided by being recorded in the removable media 1011 as a package media or the like, for example. Furthermore, the program can be provided via a wired or wireless transmission medium such as a local area network, the Internet, or digital satellite broadcasting.

In the computer 1000, the program can be installed in the recorder 1008 via the input-output interface 1005 by attaching the removable media 1011 to the drive 1010. In addition, the program can be received by the communication unit 1009 via a wired or wireless transmission medium and installed in the recorder 1008. Alternatively, the program can be installed in the ROM 1002 or the recorder 1008 in advance.

Note that the program executed by the computer may be a program in which processing is performed in time series in the order herein described, or may be a program in which processing is performed in parallel or at necessary timing such as when a call is made.

In addition, a system herein described means a set of a plurality of components (devices, modules (parts), and the like), and it does not matter whether or not all the components are in the same housing. Therefore, a plurality of devices accommodated in separate housings and connected via a network and one device in which a plurality of modules is accommodated in one housing are both systems.

Furthermore, the embodiment of the present technology is not limited to the above-described embodiments, and various modifications can be made without departing from the gist of the present technology.

For example, the present technology can have a configuration of cloud computing in which one function is shared and processed in cooperation by a plurality of devices via a network.

Furthermore, each step described in the above-described flowchart can be executed by one device or can be shared and executed by a plurality of devices.

Moreover, in a case where a plurality of processing is included in one step, the plurality of processing included in the one step can be executed by one device or can be shared and executed by a plurality of devices.

### <Example of combination of configurations>

The present technology can also employ the following configurations.
(1) A wireless communication apparatus including:
   a transmitter that transmits data to another wireless communication apparatus via one or more first links; and
   a receiver that receives control information from the another wireless communication apparatus via one or more second links in parallel with transmission of the data via the one or more first links.
(2) The wireless communication apparatus according to (1), in which
   the control information includes at least one of acknowledge notification information or non-delivery notification information of the data, and
   the wireless communication apparatus further includes a transmission manager that recognizes undelivered data on the basis of the acknowledge notification information or the non-delivery notification information.
(3) The wireless communication apparatus according to (2), in which
   the transmitter retransmits the undelivered data via one of the one or more first links or the one or more second links.
(4) The wireless communication apparatus according to (2) or (3), in which
   the transmission manager recognizes a range of the data received by the another wireless communication apparatus on the basis of the acknowledge notification information.
(5) The wireless communication apparatus according to any of (2) to (4), in which
   the transmitter is configured to simultaneously transmit the data to the another wireless communication apparatus via a plurality of the first links, and
   the receiver receives the control information including at least one of the acknowledge notification information or the non-delivery notification information of each of the data transmitted via the plurality of the first links from the another wireless communication apparatus via the one or more second links.
(6) The wireless communication apparatus according to any of (1) to (5), in which
   the receiver is configured to simultaneously receive the control information via a plurality of the second links.
(7) The wireless communication apparatus according to any of (1) to (6), further including
   an access controller that controls access to the one or more first links in accordance with a predetermined access control procedure, in which
   the transmitter transmits the data to the another wireless communication apparatus via the one or more first links that have become usable by the access control procedure.
(8) The wireless communication apparatus according to any of (1) to (7), in which
   the transmitter transmits link setup request information including information regarding a plurality of links that is settable as the first link and information regarding a link that is settable as the second link to the another wireless communication apparatus.
(9) The wireless communication apparatus according to (8), in which
   the receiver receives link setup response information including information regarding a link to be used as the first link and a link to be used as the second link by the another wireless communication apparatus from the another wireless communication apparatus in response to the link setup request information, and
   the wireless communication apparatus further includes a link manager that sets the first link and the second link on the basis of the link setup response information.
(9a) The wireless communication apparatus according to (8) or (9), in which
   the link setup request information includes information indicating a timing at which the another wireless communication apparatus transmits the control information including acknowledge notification information or non-delivery notification information of the data.
(9b) The wireless communication apparatus according to any of (8) to (9a), in which
   the link setup request information includes information indicating which of the acknowledge notification information or the non-delivery notification information of the data the another wireless communication apparatus transmits.
(9c) The wireless communication apparatus according to any of (1) to (9b), in which
   a frequency band of the first link and a frequency band of the second link are apart from each other by a predetermined space or more.
(9d) The wireless communication apparatus according to any one of (1) to (9c), in which
   the transmitter transmits a frame obtained by connecting a plurality of the data to the another wireless communication apparatus via the first link.
(10) A wireless communication method including:
   transmitting, by a wireless communication apparatus, data to another wireless communication apparatus via one or more first links; and
   receiving, by the wireless communication apparatus, control information from the another wireless communication apparatus via one or more second links in parallel with transmission of the data via the one or more first links.
(11) A wireless communication apparatus including:
   a receiver that receives data from another wireless communication apparatus via one or more first links; and
   a transmitter that transmits control information to the another wireless communication apparatus via one or more second links in parallel with reception of the data via the one or more first links.
(12) The wireless communication apparatus according to (11), further including
   a controller that generates the control information including at least one of acknowledge notification information or non-delivery notification information of the data received by the receiver via a plurality of the first links, in which
   the transmitter transmits the control information to the another wireless communication apparatus via the one or more second links.
(13) The wireless communication apparatus according to (12), in which
   the transmitter transmits the control information including the acknowledge notification information of the data having been received via the plurality of the first links to the another wireless communication apparatus via the one or more second links at a predetermined timing or after completion of reception of all the data.
(14) The wireless communication apparatus according to (12) or (13), in which
   the transmitter transmits the control information including the acknowledge notification information of all the data to the another wireless communication apparatus via a link in which the reception of the data is completed last among the plurality of the first links.
(15) The wireless communication apparatus according to any of (12) to (14), in which
   the transmitter transmits the control information including the non-delivery notification information to the another wireless communication apparatus via the one or more second links in a case where there is undelivered data.
(16) he wireless communication apparatus according to (15), in which
   the transmitter transmits the control information including the non-delivery notification information to the another wireless communication apparatus via the one or more second links in a case where a number of pieces of the undelivered data reaches a predetermined number.
(16a) The wireless communication apparatus according to (15) or (16), in which
   the receiver receives, via the one or more second links, the undelivered data having been retransmitted.
(16b) The wireless communication apparatus according to (15) or (16), in which
   the receiver receives, via one of the first links, the undelivered data having been retransmitted.
(17) The wireless communication apparatus according to any of (11) to (16b), in which
   the transmitter is configured to simultaneously transmit the control information via a plurality of the second links.
(18) The wireless communication apparatus according to any of (11) to (17), further including
   an access controller that controls access to the one or more second links in accordance with a predetermined access control procedure, in which
   the transmitter transmits the control information to the another wireless communication apparatus via the one or more second links that have become available by the access control procedure.
(19) The wireless communication apparatus according to any of (11) to (18), in which
   the receiver receives link setup request information including information regarding a link that is settable as the first link and information regarding a link that is settable as the second link from the another wireless communication apparatus,
   the wireless communication apparatus further includes a link manager that sets a link to be used as the first link and a link to be used as the second link on the basis of the link setup request information and generates link setup response information including information regarding the link to be to be used as the first link and the link to be used as the second link, and
   the transmitter transmits the link setup information to the another wireless communication apparatus.
(19a) The wireless communication apparatus according to any of (11) to (19), in which
   a frequency band of the first link and a frequency band of the second link are apart from each other by a predetermined space or more.
(19b) The wireless communication apparatus according to any one of (11) to (19a), in which
   the receiver receives a frame obtained by connecting a plurality of the data from the another wireless communication apparatus via the first link.
(20) A wireless communication method including:
   receiving, by a wireless communication apparatus, data from another wireless communication apparatus via one or more first links; and
   transmitting, by the wireless communication apparatus, control information to the another wireless communication apparatus via one or more second links in parallel with reception of the data via the one or more first links.

Note that the effects herein described are merely examples and are not limited, and furthermore, other effects may be obtained.

### REFERENCE SIGNS LIST

- 1: Wireless LAN network
- 101: Wireless communication apparatus
- 111: Network connection module
- 113: Device control module
- 115: Wireless communication module
- 203: Link manager
- 204: Transmission manager
- 205: Transmission frame constructor
- 206: Access controller
- 207: Transmitter-receiver
- 209: Reception frame constructor
- 210: Reception manager
- 221: Transmitter
- 222: Receiver
- 231-1 to 231-m: Transmission signal processor
- 232-1 to 232-n: Transmission signal processor
- 241-1 to 241-m: Reception signal processor
- 242-1 to 242-n: Reception signal processor

## Claims

1. A wireless communication apparatus comprising:
a transmitter that transmits data to another wireless communication apparatus via one or more first links; and
a receiver that receives control information from the another wireless communication apparatus via one or more second links in parallel with transmission of the data via the one or more first links.

2. The wireless communication apparatus according to claim 1, wherein
the control information includes at least one of acknowledge notification information or non-delivery notification information of the data, and
the wireless communication apparatus further includes a transmission manager that recognizes undelivered data on a basis of the acknowledge notification information or the non-delivery notification information.

3. The wireless communication apparatus according to claim 2, wherein
the transmitter retransmits the undelivered data via one of the one or more first links or the one or more second links.

4. The wireless communication apparatus according to claim 2, wherein
the transmission manager recognizes a range of the data received by the another wireless communication apparatus on a basis of the acknowledge notification information.

5. The wireless communication apparatus according to claim 2, wherein
the transmitter is configured to simultaneously transmit the data to the another wireless communication apparatus via a plurality of the first links, and
the receiver receives the control information including at least one of the acknowledge notification information or the non-delivery notification information of each of the data transmitted via the plurality of the first links from the another wireless communication apparatus via the one or more second links.

6. The wireless communication apparatus according to claim 1, wherein
the receiver is configured to simultaneously receive the control information via a plurality of the second links.

7. The wireless communication apparatus according to claim 1, further comprising
an access controller that controls access to the one or more first links in accordance with a predetermined access control procedure, wherein
the transmitter transmits the data to the another wireless communication apparatus via the one or more first links that have become usable by the access control procedure.

8. The wireless communication apparatus according to claim 1, wherein
the transmitter transmits link setup request information including information regarding a plurality of links that is settable as the first link and information regarding a link that is settable as the second link to the another wireless communication apparatus.

9. The wireless communication apparatus according to claim 8, wherein
the receiver receives link setup response information including information regarding a link to be used as the first link and a link to be used as the second link by the another wireless communication apparatus from the another wireless communication apparatus in response to the link setup request information, and
the wireless communication apparatus further includes a link manager that sets the first link and the second link on a basis of the link setup response information.

10. A wireless communication method comprising:
transmitting, by a wireless communication apparatus, data to another wireless communication apparatus via one or more first links; and
receiving, by the wireless communication apparatus, control information from the another wireless communication apparatus via one or more second links in parallel with transmission of the data via the one or more first links.

11. A wireless communication apparatus comprising:
a receiver that receives data from another wireless communication apparatus via one or more first links; and
a transmitter that transmits control information to the another wireless communication apparatus via one or more second links in parallel with reception of the data via the one or more first links.

12. The wireless communication apparatus according to claim 11, further comprising
a controller that generates the control information including at least one of acknowledge notification information or non-delivery notification information of the data received by the receiver via a plurality of the first links, wherein
the transmitter transmits the control information to the another wireless communication apparatus via the one or more second links.

13. The wireless communication apparatus according to claim 12, wherein
the transmitter transmits the control information including the acknowledge notification information of the data having been received via the plurality of the first links to the another wireless communication apparatus via the one or more second links at a predetermined timing or after completion of reception of all the data.

14. The wireless communication apparatus according to claim 12, wherein
the transmitter transmits the control information including the acknowledge notification information of all the data to the another wireless communication apparatus via a link in which the reception of the data is completed last among the plurality of the first links.

15. The wireless communication apparatus according to claim 12, wherein
the transmitter transmits the control information including the non-delivery notification information to the another wireless communication apparatus via the one or more second links in a case where there is undelivered data.

16. The wireless communication apparatus according to claim 15, wherein
the transmitter transmits the control information including the non-delivery notification information to the another wireless communication apparatus via the one or more second links in a case where a number of pieces of the undelivered data reaches a predetermined number.

17. The wireless communication apparatus according to claim 11, wherein
the transmitter is configured to simultaneously transmit the control information via a plurality of the second links.

18. The wireless communication apparatus according to claim 11, further comprising
an access controller that controls access to the one or more second links in accordance with a predetermined access control procedure, wherein
the transmitter transmits the control information to the another wireless communication apparatus via the one or more second links that have become available by the access control procedure.

19. The wireless communication apparatus according to claim 11, wherein
the receiver receives link setup request information including information regarding a link that is settable as the first link and information regarding a link that is settable as the second link from the another wireless communication apparatus,
the wireless communication apparatus further includes a link manager that sets a link to be used as the first link and a link to be used as the second link on a basis of the link setup request information and generates link setup response information including information regarding the link to be to be used as the first link and the link to be used as the second link, and
the transmitter transmits the link setup response information to the another wireless communication apparatus.

20. A wireless communication method comprising:
receiving, by a wireless communication apparatus, data from another wireless communication apparatus via one or more first links; and
transmitting, by the wireless communication apparatus, control information to the another wireless communication apparatus via one or more second links in parallel with reception of the data via the one or more first links.
